Europäisches Patentamt

European Patent Office

Office européen des brevets

(19)

(11) **EP 1 359 782 A1**

(12) # EUROPEAN PATENT APPLICATION

(43) Date of publication:
**05.11.2003 Bulletin 2003/45**

(51) Int Cl.⁷: **H04Q 7/38**

(21) Application number: **03010141.4**

(22) Date of filing: **05.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **03.05.2002 KR 2002024558**

(71) Applicant: **SAMSUNG ELECTRONICS CO., LTD.**
**Suwon-City, Kyungki-do (KR)**

(72) Inventors:
- **Kwak, Yong-Jun**
  **Paldal-gu, Suwong-city, Kyungki-do (KR)**
- **Lee, Hyeon-Woo**
  **Paldal-gu, Suwong-city, Kyungki-do (KR)**

- **Kim, Jeong-Gon**
  **Paldal-gu, Suwong-city, Kyungki-do (KR)**
- **Lee, Kook-Heui**
  **Paldal-gu, Suwong-city, Kyungki-do (KR)**
- **Choi, Sung-Ho**
  **Paldal-gu, Suwong-city, Kyungki-do (KR)**
- **Kim, Soeng-Hun**
  **Paldal-gu, Suwong-city, Kyungki-do (KR)**
- **Lee, Ju-Ho**
  **Paldal-gu, Suwong-city, Kyungki-do (KR)**
- **Park, Dong-Seek**
  **Paldal-gu, Suwong-city, Kyungki-do (KR)**

(74) Representative: **Grünecker, Kinkeldey,**
**Stockmair & Schwanhäusser Anwaltssozietät**
**Maximilianstrasse 58**
**80538 München (DE)**

(54) **Apparatus and method for providing service based on multiple data rates in mobile communication system**

(57)    A method and apparatus for providing a service based on multiple data rates using scalability of a multimedia CODEC in an asynchronous code division multiple access (CDMA) communication system, which provides a multimedia broadcast and multicast service (MBMS). An entire cell area is divided into a first area and a second area. Specific data is separated into first data and second data. The first data is transmitted to the first area, and the second data is transmitted to the second area. A first electric power controller controls electric power for the first data. A second electric power controller controls electric power for the second data. A user equipment (UE) located in the second area receives the first data and the second data. The UE located in the second area combines the first data and the second data, thereby generating one data item.

FIG.3

**Description**

**BACKGROUND OF THE INVENTION**

1. Field of the Invention

The present invention relates to a wideband code division multiple access (WCDMA)-based mobile communication system, and more particularly to an apparatus and method for providing a multimedia broadcast and multicast service (MBMS).

2. Description of the Related Art

Conventionally, a multimedia broadcast and multicast service (MBMS) is provided to all user equipments (UEs), desiring to receive a multimedia service, through a single channel by a wideband code division multiple access (WCDMA)-based mobile communication system. In the MBMS, a plurality of UEs share the single channel for receiving service data, such that efficiency of the channel can be maximized. Moreover, the multimedia service can be appropriately provided by efficiently employing the channel. For this reason, the multimedia service can be provided at lower cost.

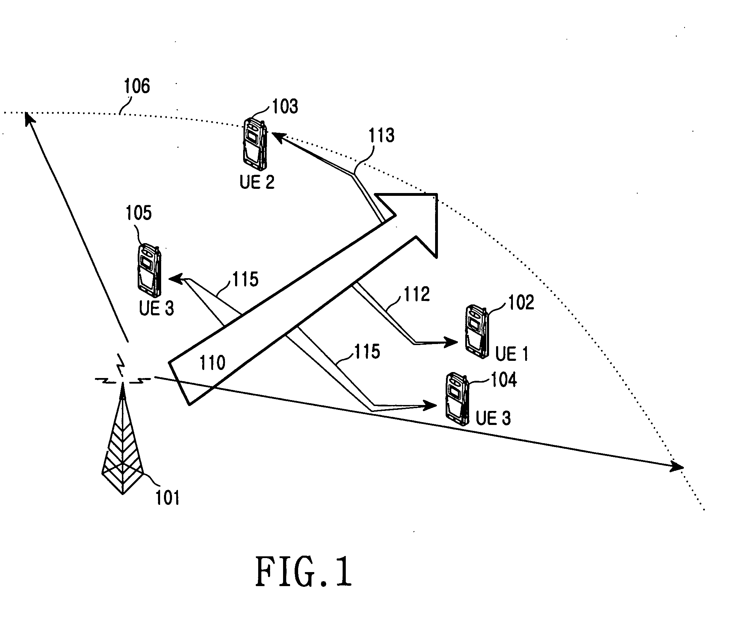

Fig. 1 shows a basic concept of the conventional MBMS. The basic concept of the MBMS will be described in detail with reference to Fig. 1. In a conventional broadcast and multicast control (BMC) method, techniques of sharing a single channel are used. Particularly, the conventional BMC method is used for text broadcasting requiring a low data rate. Here, the text broadcasting is not restricted by delay time. On the other hand, the MBMS requires a relatively higher data rate and is restricted by delay time. Thus, architecture of the MBMS is different from that of the BMC.

Fig. 1 shows a form where the MBMS is provided from a Node-B 101 to UEs 102 to 105. A reference numeral 106 indicates a boundary of a service cell in which the Node-B 101 provides services. The UEs 102 to 105 are located inside the cell area to receive signals transmitted from the Node-B 101. A reference numeral 110 shown in Fig. 1 indicates a form of MBMS channel transmission by the Node-B 101, and a reference numeral 112 shown in Fig. 1 indicates a path of MBMS channel reception by the UE 102. Further, reference numerals 113, 114 and 115 indicate paths of MBMS channel receptions by the UEs 103, 104 and 105. That is, the Node-B 101 transmits an MBMS signal as indicated by the reference numeral 110, and the UEs 102 to 105 receive the MBMS signal through the paths of the reference numerals 112 to 115. The width of each arrow indicates an intensity of the MBMS signal. As shown in Fig. 1, an arrow of a transmission signal from the Node-B 101 is of the greatest width. As the UE is farther from the Node-B, the intensity of a reception signal becomes smaller and the width of an arrow indicating the reception signal becomes narrower. Thus, an arrow indicating the reception signal of the UE 105 being nearest to the Node-B 101 is of the second greatest width, while an arrow indicating the reception signal of the UE 103 being farthest from the Node-B 101 is of the smallest width.

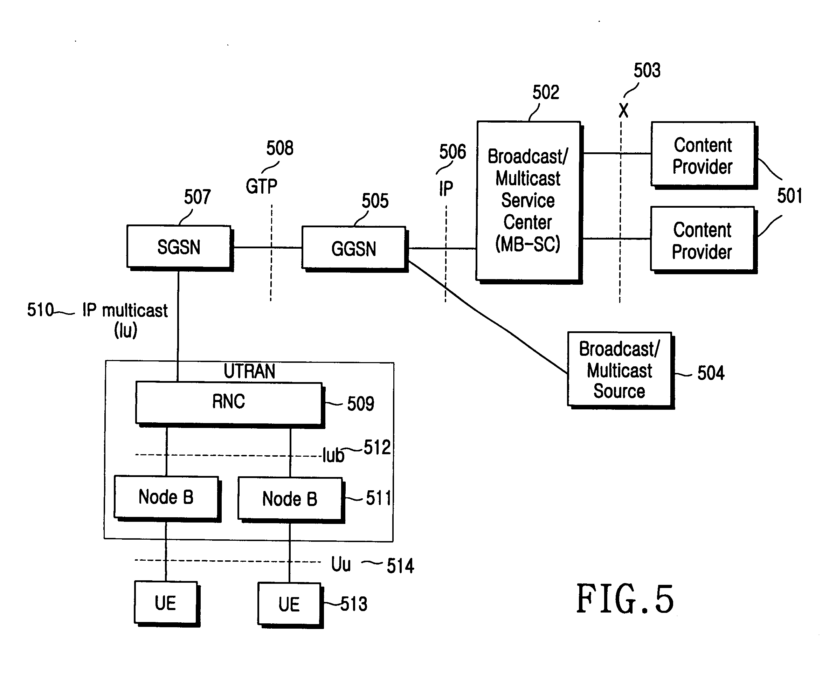

Fig. 5 shows the configuration of a basic network for the MBMS. The configuration of the basic network for the MBMS will be described in detail with reference to Fig. 5. The MBMS network must be able to provide various multimedia contents and also accommodate a plurality of different MBMS providers. Each of content providers 501 transfers multimedia contents to a multicast/broadcast service center (MB-SC) 502. An "X" interface 503 between the content provider 501 and the MB-SC 502 can be varied according to a mobile network provider or an MBMS service provider. The "X" interface 503 is not restricted by a specified standard.

The MB-SC 502 shown in Fig. 5 schedules the multimedia contents provided by the content provider 501 on a channel-by-channel basis and then transfers the scheduled multimedia contents to a gateway general packet radio service (GPRS) support node (GGSN) 505. Moreover, the MB-SC 502 provides interfaces with the content providers 501, and performs charging and authentication functions for the content providers 501. The multimedia contents can be provided by a broadcast/multicast source 504 directly connected to the GGSN 505 without going through the MB-SC 502. Where the multimedia contents can be provided by the broadcast/multicast source 504, an interface between the GGSN 505 and the MB-SC 502 or between the GGSN 505 and the broadcast/multicast source 504 can employ an Internet protocol (IP) 506. On the other hand, where the multimedia contents are not provided by the broadcast/multicast source 504, the MB-SC 502 controls all multimedia contents for the MBMS. The MB-SC 502 transfers MBMS contents to a serving GPRS support node (SGSN) 507 through the GGSN 505 using a generic tunneling protocol (GTP) 508. The GGSN 505 can copy the MBMS contents to transfer the copied MBMS contents to a plurality of SGSNs 507.

Referring to Fig. 5, the SGSN 507 transfers the MBMS contents to a radio network controller (RNC) 509 on a service-by-service basis using an Internet protocol 510. The Internet protocol 510 enables the SGSN 507 to perform a multicast function of transferring the same contents to a plurality of RNCs 509. Optionally, the Internet protocol 510 can support a unicast function such that the SGSN 507 transfers the contents to only a single RNC 509.

Referring to Fig. 5, the RNC 509 delivers the MBMS to Node-Bs 511 through an Iub interface 512. Each Node-B 511 delivers the MBMS to a corresponding user equipment (UE) 513 using a Uu interface 514 being an air interface. Here, the corresponding UE 513 located within a cell area of the Node-B 511 supports the MBMS.

The delivery of data between components of the mobile communication system will be described in detail with reference to Fig. 5. An IP-based multicast connection is accomplished between the MB-SC 502 and the GGSN 505. The GTP coupled between the GGSN 505 and the SGSN 507 supports the MBMS. A radio access bearer for the IP-based multicast connection must be configured between the SGSN 507 and the RNC 509. Moreover, the radio access bearer must be configured between the RNC 509 and each of the Node-Bs 511 such that the RNC 509 delivers the MBMS from the SGSN 507 to the UE 513. Moreover, a common radio channel must be set up between the Node-B 511 and the UE 513 such that the MBMS delivered from the RNC 509 can be provided to the UE 513.

The respective components of the mobile communication system transfer necessary messages through the above-described method such that the MBMS can be provided appropriately. Next, various types of messages transferred for initiating the MBMS and a procedure of transferring the messages will be described. Service contexts managed by the Node-Bs 511 supporting the MBMS will be described. Each Node-B 511 must store a list of the UEs 513 receiving the MBMS and information of a cell area to which the UEs 513 belong such that an arbitrary MBMS can be provided to the UEs 513. According to the stored information, the MBMS delivered from the RNC 509 must be provided to the cell area in which the UEs 513 are located. Items of the information are updated and managed in the service contexts of the Node-Bs 511. Moreover, the RNC 509 can manage and update RNC service context in conjunction with the MBMS. The information of the RNC service context can contain the following items.

RNC service context = {MBMS identity, identity of cell receiving or having received MBMS, information indicating quality of service (QoS) required for providing MBMS}

The RNC 509 manages and updates the RNC service context for a specific MBMS. Where the MBMS is actually provided, the RNC 509 refers to the RNC service context and delivers an MBMS stream to an appropriate cell. The SGSN 507 also can manage and update SGSN service context for each MBMS. Information of the SGSN service context can contain the following items.

SGSN service context = {MBMS identity, identity of RNC receiving or having received MBMS, information indicating quality of service (QoS) required for providing MBMS}

The SGSN 507 manages and updates the SGSN service context for a specific MBMS. Where the MBMS is actually provided, the SGSN 507 refers to the SGSN service context and delivers an MBMS stream to an appropriate cell.

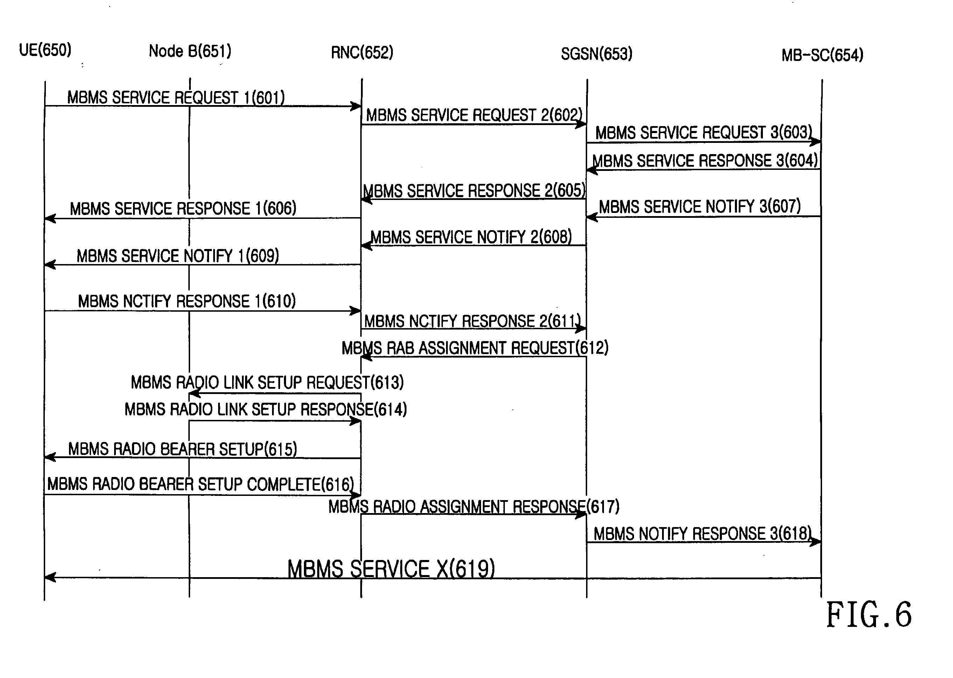

Next, messages transferred to provide the MBMS will be described in detail with reference to Fig. 6.

First, a UE 650 sends a first MBMS request message (MBMS SERVICE REQUEST 1) for requesting an RNC 652 to provide an arbitrary MBMS X at step 601. Here, the first MBMS request message includes an identity of an MBMS desired by the UE 650, and a user identity being an identity of the UE 650 sending the first MBMS request message. In response to the first MBMS request message, the RNC 652 updates RNC service context, which is managed. That is, the RNC 652 adds, to the RNC service context, the user identity of the UE 650, the identity of the MBMS requested by the UE 650, and an identity of a cell to which the UE 650 belongs, i.e., the cell identity of a Node-B 651. The RNC 652 having the added information transmits a second MBMS request message (MBMS SERVICE REQUEST 2) for requesting an SGSN 653 to provide the MBMS X at step 602.

The case where the RNC 652 updates the RNC service context has been described, but the RNC 652 can newly configure the RNC service context for the MBMS X where the MBMS X requested by the UE 650 is a new MBMS. The RNC 652 manages information of the newly configured RNC service context (containing the user identity of the UE 650 and the identity of the MBMS requested by the UE 650). Moreover, the second MBMS request message includes the identity of the MBMS requested by the UE 650 and an identity of the RNC 652 sending the second MBMS request message.

In response to the second MBMS request message from the RNC 652, the SGSN 653 updates the SGSN service context, which is managed. That is, the RNC 652 adds, to receiver-related information of the SGSN service context, the user identity of the UE 650 and the identity of the RNC 652 to which the UE 650 belongs. The SGSN 653 having the added information transmits to an MB-SC 654 a third MBMS request message (MBMS SERVICE REQUEST 3) for requesting theMB-SC 654 to provide the MBMS X at step 603. The case where the SGSN 653 updates the SGSN service context has been described, but the SGSN 653 newly configures the SGSN service context where the MBMS X requested by the UE 650 is a new MBMS. The SGSN 653 manages information of the newly configured SGSN service context (containing the identity of the RNC 652).

The third MBMS request message includes the identity of the MBMS requested by the UE 650. In response to the third MBMS request message, the MB-SC 654 transmits, to the SGSN 653, a third MBMS response message (MBMS SERVICE RESPONSE 3) at step 604. The third MBMS response message indicates that the third MBMS request message has been appropriately received and the MBMS X has been added to service context on the basis of received information. Here, the third MBMS response message includes the MBMS identity.

In response to the third MBMS response message, the SGSN 653 transmits, to the RNC 652, a second MBMS response message (MBMS SERVICE RESPONSE 2) indicating that the third MBMS request message has been appropriately received at step 605. The second MBMS response message includes the MBMS identity. In response to the second MBMS response message, the RNC 652 transmits, to the UE 650, a first MBMS response message (MBMS SERVICE RESPONSE 1) indicating that the second MBMS response message has been appropriately received at step 606. Here, the first MBMS response message includes the MBMS identity. The UE 650 receives the first MBMS response message, and waits for other control information to be received from a network.

The MB-SC 654 notifies the SGSN 653 that the MBMS X is to be initiated soon, by transmitting a third MBMS notification message (MBMS SERVICE NOTIFY 3) to identify UEs desiring to actually receive the MBMS X at step 607. Here, a significant time difference may exist between the above step 606 and the above step 607. A target of the above steps 601 to 606 is to verify the validation of arbitrary MBMS delivery. Other steps containing the above step 607 are to perform a procedure used for actually providing the MBMS. In other words, through the above steps 601 to 606, the UEs are notified of a schedule associated with an arbitrary MBMS or a plurality of MBMSs. The UEs, having received the notification, determine whether the MBMS must be received. The UEs transmit a result of the determination to the MB-SC 654. In response to the result of the determination, the MB-SC 654 determines whether a corresponding MBMS must be provided. Thus, the above steps 601 to 606 are performed before the service is actually provided. The third MBMS notification message includes the MBMS identity, a service initiation time at which the MBMS is actually initiated, and QoS information. Upon receiving the third MBMS notification message, the SGSN 653 sets up a transmission path for providing the MBMS X and an Iu connection. Moreover, the SGSN 653 updates the SGSN service context using the received QoS information. The SGSN 653 identifies the UEs desiring to receive the MBMS, and transmits, to the RNC 652, a second MBMS notification message (MBMS SERVICE NOTIFY 2) indicating that the MBMS is to be initiated soon at step 608. The second MBMS notification message includes the MBMS identity, the service initiation time and the QoS information. Upon receiving the second MBMS notification message, the RNC 652 identifies the UEs contained in the managed RNC service context and at least one cell to which the UEs belong. Then, the RNC 652 transmits a first MBMS notification message (MBMS SERVICE NOTIFY 1) at step 609, so the RNC 652 notifies the UE 650 that the MBMS X is to be initiated soon. Here, the first MBMS notification message includes the MBMS identity, the service initiation time and the QoS information.

Upon receiving the first MBMS notification message, the UE 650 determines whether the MBMS X must be actually received. If the UE 650 desires to receive the MBMS X, the UE 650 transmits a first MBMS notification response message (MBMS NOTIFY RESPONSE 1) to the RNC 652 after storing the received QoS information at step 610. The first MBMS notification response message includes the MBMS identity and the UE identity. In response to the first MBMS notification response message, the RNC 652 transmits, to the SGSN 653, a second MBMS notification response message (MBMS NOTIFY RESPONSE 2) indicating that the second MBMS notification message has been appropriately received, at step 611. The case where the RNC 652 receives the first MBMS notification response message from only the UE 650 has been described, but the first MBMS notification message can be received also from a number of the UEs. In this case, the RNC 652 updates the RNC service context by adding, to the RNC service context, identities of the UEs and identities of cells to which the UEs belong.

The second MBMS notification response message transmitted by the RNC 652 includes at least one MBMS identity and at least one UE identity. Upon receiving the second MBMS notification response message, the SGSN 653 updates the managed RNC service context by adding, to the RNC service context, UE identities and the RNC identity contained in the second MBMS notification response message. Moreover, the SGSN 653 transmits, to the RNC 652, an MBMS radio access bearer (RAB) assignment request message needed for setting up a transmission path for transmitting at least one stream of the MBMS X at step 612. The RAB assignment request message includes the MBMS identity and the QoS information. Upon receiving the RAB assignment request message, the RNC 652 identifies cells and UEs contained in the RNC service context. Then, the RNC 652 prepares the setup of a radio link for use in the cell, i.e., the Node-B 651 on the basis of the received QoS information. At this time, the RNC 652 can determine whether radio bearers must be set up as downlink shared data channels or as a downlink data channel and a downlink informal dedicated control channel and an uplink dedicated channel on a UE-by-UE basis, by considering the number of UEs belonging to cells contained in the RNC service context. Next, information of the channels will be described. That is, if the number of UEs belonging to a cell is greater than a threshold value, the RNC 652 sets up the downlink shared data channels. Otherwise, if the number of UEs belonging to a cell is less than the threshold value, the RNC 652 sets up the downlink data channel and the downlink informal dedicated control channel and the uplink dedicated channel on the UE-by-UE basis. It is obvious that the threshold value can be changed by a user's setup or a specification of the mobile communication system. Here, it is assumed that the RNC 652 sets up the downlink data channel, the downlink informal dedicated control channel and the uplink dedicated channel.

The RNC 652 transmits an MBMS radio link setup request message for requesting the Node-B 651 to set up a radio link for transmitting a stream of the MBMS X at step 613. Here, the MBMS radio link setup request message can include channelization code information, scrambling code information, at least one slot format number, channel coding information, etc. to be applied to the downlink data channel carrying the MBMS X stream. The MBMS radio link setup request message can further include channelization code information, scrambling code information, channel coding information, etc. to be applied to the downlink informal dedicated control channel. The MBMS radio link setup request message can further include channelization code information, scrambling code information, transmit power control (TPC)-related information, channel coding information, etc. to be applied to the uplink dedicated channel. The TPC-related information includes channel quality-related information to be applied to the uplink dedicated channel and step size information to be applied to the downlink data channel and the downlink informal dedicated control channel. The Node-B 651, having received the radio link setup request message, sets up the downlink data channel and the downlink informal dedicated control channel using the channelization code information and scrambling code information contained in the radio link setup request message, and completes the preparation for receiving the uplink dedicated channel. Upon completing the preparation for receiving the uplink dedicated channel, the Node-B 651 transmits, to the RNC 652, a radio link setup response message indicating that the radio link has been set up at step 614.

Upon receiving the radio link setup response message, the RNC 652 requests the UEs, managed by the Node-B 651 sending the radio link setup response message, to set up radio bearers. That is, in conjunction with Fig. 6, the RNC 652 transmits an MBMS radio bearer setup message for requesting the UE 650 to set up the radio bearer at step 615. Here, the radio bearer setup message includes the channelization code information, scrambling code information and slot format number associated with the downlink data channel, the channelization code information and scrambling code information associated with the downlink informal dedicated control channel, the channelization code information and scrambling code information associated with the uplink dedicated channel, etc. The radio bearer setup message can further include the channel quality-related information to be applied to the downlink data channel and the downlink dedicated control channel and the step size information to be applied to the uplink dedicated channel. Upon receiving the radio bearer setup message, the UE 650 completes the preparation for receiving the downlink data channel and the downlink dedicated control channel with the information contained in the radio bearer setup message, and sets up the uplink dedicated channel. The UE 650, having set up the uplink dedicated channel, transmits, to the RNC 652, an MBMS radio bearer setup completion message (MBMS RADIO BEARER SETUP COMPLETE) indicating that the radio bearer setup has been completed at step 616. The radio bearer setup completion message includes an MBMS identity and a user identity. The RNC 652 updates the managed RNC service context by adding an identity of the UE 650 sending the radio bearer setup completion message to the RNC service context. Then, the RNC 652 having updated the RNC service context transmits, to the SGSN 653, an MBMS RAB assignment response message indicating that a transmission path of the MBMS X has been completely configured at step 617. The MBMS RAB assignment response message includes the MBMS identity and identities of UEs. Upon receiving the MBMS RAB assignment response message, the SGSN 653 updates the managed SGSN service context by adding, to the SGSN service context, the identities of the UEs contained in the MBMS RAB assignment response message. The SGSN 653 having updated the SGSN service context transmits, to the MB-SC 654, a third MBMS notification response message (MBMS NOTIFY RESPONSE 3) indicating that the preparation for receiving the MBMS X has been completed at step 618. The third MBMS notification response message includes the MBMS identity. The MB-SC 654 of the mobile communication system having performed the above steps 601 to 618, provides the stream of the MBMS X to the UE 650 after receiving the third MBMS notification response message at step 619.

Each of the above-described messages can include not only the above-described types of information, but also other types of information.

In an existing wideband code division multiple access (WCDMA)-based communication system, a single carrier carries a plurality of physical channels used in one cell. The single carrier carries all physical channels such as a common channel, a dedicated channel, etc., since radio resources of a Node-B are insufficient. For example, the resources include channelization code resources and transmission power resources. A code tree for the channelization codes is associated with the single carrier, and the number of channels to be simultaneously carried on the single carrier is restricted by the code tree. Since a conventional power amplifier included in the Node-B is limited by power intensities capable of satisfying power amplifier linearity, only limited transmission power resources can be employed. The greatest problems are about the insufficient transmission power resources and the insufficient channelization code resources.

As a general rule, as a data rate increases is typically higher, the transmission power increases. Very high transmission power is required for providing service to one entire cell. That is, in order for UE located at the boundary of the cell to appropriately receive the channel for the MBMS when the MBMS of a high data rate is provided through the entire cell area, the transmission power assigned to a channel must be very high. Thus, there are problems in that the number of MBMSs that can be provided is limited and that the electric power assignable to channels for services such as voice communication, packet communication, etc. becomes insufficient. Referring to Fig. 1, the intensity of a signal received by the UE 103 located at the boundary of the cell, as indicated by the width of an arrow 113, must be greater than a predetermined level. Above all, the transmission power indicated by the reference numeral 110 shown in Fig. 1 must be sufficient enough such that the intensity of the reception signal indicated by the width of the arrow 113 can be greater than the predetermined level. As a result, the above-described conventional method has a problem that the transmission power may be very high.

In order for a Node-B to perform a transmission operation on the basis of transmission power with which UE located at the cell boundary can appropriately receive a channel of a bit rate, i.e., 64 kbps, appropriate to an actual video service, most of the transmission power available in the Node-B must be assigned to the video service. Thus, there are problems in that the number of services capable of being provided cannot exceed two, and resources for another voice communication or packet service cannot be appropriately assigned even though a single service is provided.


**SUMMARY OF THE INVENTION**

Therefore, the present invention has been made in view of the above problems, and it is one object of the present invention to provide an apparatus and method for enabling data reception performances to be different according to locations of user equipments (UEs) within the same cell in a mobile communication system.

It is another object of the present invention to provide an apparatus and method for improving a problem of insufficient transmission power of a Node-B and other problems associated with an assignment of the transmission power when a multimedia broadcast and multicast service (MBMS) is provided.

It is another object of the present invention to provide an apparatus and method for providing one multimedia broadcast and multicast service (MBMS) through at least two physical channels using scalability of a multimedia CODEC, instead of a single physical channel using high transmission power.

It is yet another object of the present invention to provide an apparatus and method for reducing a total amount of transmission power capable of being assigned for providing one multimedia broadcast and multicast service (MBMS) by allowing one of two physical channels to use first transmission power at a boundary of a cell and allowing the other physical channel to use a second transmission power less than the first transmission power.

In accordance with a first aspect of the present invention, there is provided a method for transmitting data from a Node-B to a first user equipment (UE) located within at least one second cell area covered by the Node-B and a second UE located within a first cell area, covered by the Node-B, being outside the second cell area, the first cell area including a cell boundary and the second cell area, comprising the steps of transmitting base data to the second UE with electric power, which allows UEs, located at the cell boundary of the first cell area, to receive the base data, wherein the data includes encoded base data and enhanced data for supplementing the base data; and transmitting the enhanced data to the first UE with electric power, which allows UEs, located within the second cell area, to receive the enhanced data, wherein the first UE can receive higher-quality data in comparison with the second UE by receiving all the base data and the enhanced data.

In accordance with a second aspect of the present invention, there is provided a method for separately transmitting a base data stream and an enhanced data stream for supplementing the base data stream through independent channels from a Node-B of a mobile communication system, which receives the base data stream and the enhanced data stream as data corresponding to one service and provides the base data stream and the enhanced data stream to user equipments (UEs) located within a cell, the method comprising the steps of transmitting the base data stream with first transmission power, which allows the UEs, located within the cell, to receive the base data stream; and transmitting the enhanced data stream with second transmission power, which is relatively lower than the first transmission power.

In accordance with a third aspect of the present invention, there is provided a method for allowing a user equipment (UE) to receive base data and enhanced data for supplementing the base data transmitted through different channels by a Node-B, the base data and the enhanced data being separated from predetermined data, the method comprising the steps of: if all the base data and the enhanced data are received, combining first data generated by decoding the base data and second data generated by decoding the enhanced data and outputting the combined first and second data; and if only the base data is received, decoding only the base data and outputting the decoded base data.

In accordance with a fourth aspect of the present invention, there is provided an apparatus for allowing a user equipment (UE) to receive base data and enhanced data, the UE including decoders for separating the base data and the enhanced data from predetermined data and individually decoding the base data and the enhanced data transmitted through different channels by a Node-B, the apparatus comprising means for receiving first decoded data outputted by decoding the base data and second decoded data outputted by decoding the enhanced data, and obtaining timing information of the first and second decoded data; and a combiner for receiving the first decoded data and the second decoded data and combining the first decoded data and the second decoded data on the basis of the timing information from said means.

**BRIEF DESCRIPTION OF THE DRAWINGS**

The above and other objects, features and other advantages of the present invention will be more clearly understood from the following detailed description taken in conjunction with the accompanying drawings, in which:

Fig. 1 is a schematic diagram illustrating a procedure of providing a multimedia broadcast and multicast service (MBMS) for use in a conventional asynchronous code division multiple access (CDMA) communication system;
Fig. 2 is a view illustrating structures of a transport channel and a physical channel for the MBMS to which the present invention is applied;
Fig. 3 shows a basic architecture for providing a service at multiple data rates to which the present invention is applied;
Fig. 4A is a view illustrating spatial scalability of a video CODEC, which is applied to the present invention;
Fig. 4B is a view illustrating temporal scalability of the video CODEC, which is applied to the present invention;
Fig. 4C is a view illustrating signal-to-noise ratio (SNR) scalability of the video CODEC, which is applied to the present invention;
Fig. 5 is a view illustrating the configuration of a basic network for a conventional MBMS;
Fig. 6 is a view illustrating types of messages transferred for the conventional MBMS and a procedure of transferring the messages;
Fig. 7 is a view illustrating a procedure of transferring messages for a middle data rate (MDR) MBMS to which the present invention is applied;
Fig. 8 is a view illustrating a format of a real-time protocol (RTP) packet, which is applied to the present invention;
Fig. 9 is a view illustrating a procedure of processing data in user equipment (UE) to which the present invention is applied;
Fig. 10 is a view illustrating the configuration of a Node-B to which the present invention is applied; and
Fig. 11 is a view illustrating a configuration of the UE to which the present invention is applied.

**DETAILED DESCRIPTION OF THE PREFERRED EMBODIMENTS**

Fig. 1 illustrates a general concept of a multimedia broadcast and multicast service (MBMS). A Node-B supports one service for a plurality of user equipments (UEs) located within a service area of the Node-B using one resource element. That is, the Node-B supports the MBMS for the UEs located within the service area of the Node-B using electric power as the resource element. At this time, as the UEs are farther from the Node-B, the MBMS is provided to the UEs by weakened electric power.

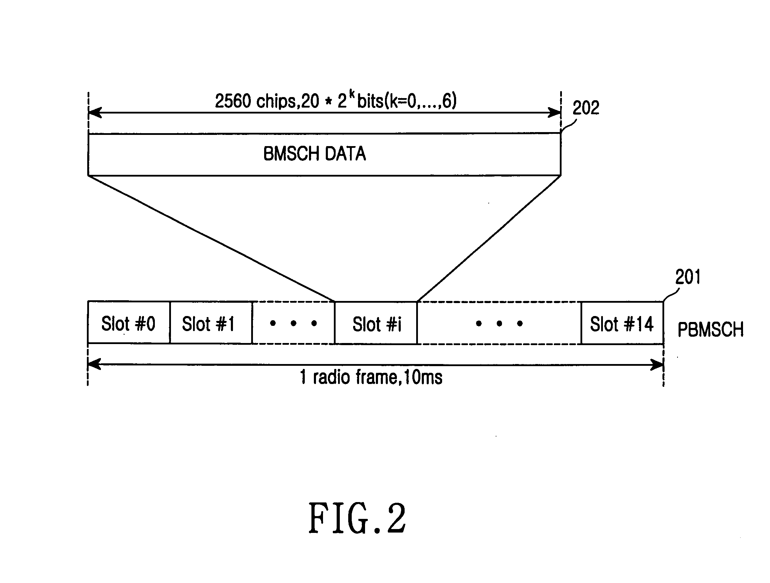

Fig. 2 is a view illustrating a transport channel and a physical channel for the MBMS in accordance with the present invention. No channel for the MBMS associated with a physical layer is defined in 3rd generation project partnership (3GPP) associated with an asynchronous international mobile telecommunications-2000 (IMT-2000) standard, so names of the transport and physical channels for the MBMS shown in Fig. 2 are newly defined. The physical channel for the MBMS is referred to as a physical broadcast and multicast shared channel (PBMSCH), and the transport channel for the MBMS is referred to as a broadcast and multicast shared channel (BMSCH). A reference numeral 201 shown in Fig. 2 indicates a structure of the PBMSCH, and a reference numeral 202 shown in Fig. 2 indicates a structure of the BMSCH, which is transmitted through the PBMSCH. In accordance with the present invention, the reason why the new transport channel and the new physical channel for the MBMS are defined as shown in Fig. 2 is to describe the present invention using the new names' channels with the most basic properties of existing channels, because the MBMS has not only the possibility of using the transport channel and the physical channel relating to a conventional wideband code division multiple access (WCDMA) system, but also the possibility of using the new channels. That is, the PBMSCH 201 shown in Fig. 2 has the same time-slot structure as a physical channel used in an existing mobile communication system. Similarly, the BMSCH 202 shown in Fig. 2 also can use the structure of an existing transport channel. In this case, the transport channel is multiplexed along with pilot information, transport format combination indicator (TFCI), etc., thereby forming the physical channel. For example, the PBMSCH 201 being the physical channel can use a secondary common control physical channel (S-CCPCH), and the transport channel can use a forward access channel (FACH).
That is, the transport channel and the physical channel are flexible as described above, and one of the slots in the PBMSCH basically corresponds to the multiplexed BMSCH as indicated by the reference numeral 202 shown in Fig. 2. Moreover, a spreading factor (SF) varies with a bit rate of service provided through the PBMSCH, and the number of bits per slot of the PBMSCH is designated on the basis of the variation. Basically, the bit rate of a video MBMS is based on 64 kbps, and hence an SF of the physical channel to be used becomes 32.

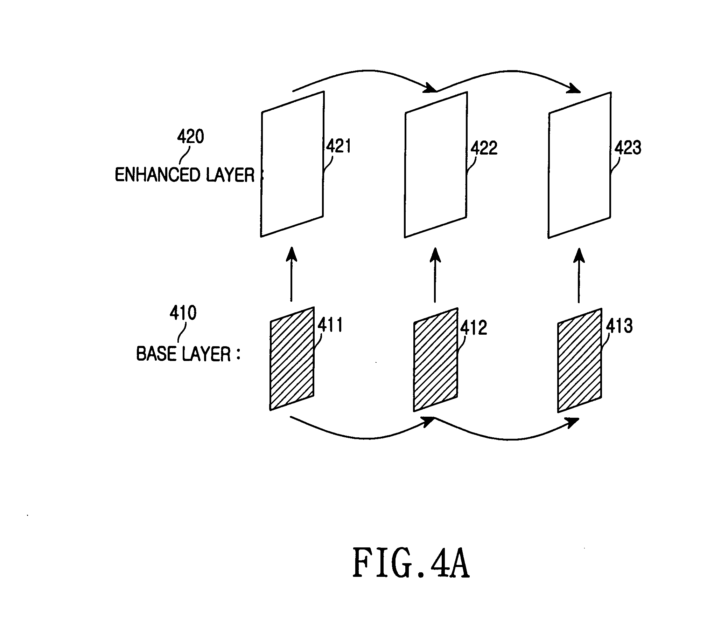

Next, scalability of a video CODEC will be described. In the conventional WCDMA system, the video CODEC used for radio video communication is associated with motion picture experts group-4 (MPEG-4) and H.263(+). Since the CODEC has been made such that it can be used for the radio video communication based on a low transmission rate, the CODEC can be used for video transmissions in other radio communication systems as well as the conventional WCDMA system. The video CODEC may selectively have the scalability. The scalability of the video CODEC enables various quality images to be reproduced from one transmission image according to a decoder and transmission path. The scalability includes temporal scalability, spatial scalability, signal-to-noise ratio (SNR) scalability, etc. To use the scalability, the video CODEC is divided into a physical configuration for the base layer and another physical configuration for the enhanced layer, which perform video encoding. The base layer is necessarily needed to reproduce the enhanced layer. Additional information associated with the enhanced layer is used for its playback. Figs. 4A to 4C illustrate the scalability of the video CODEC.

Fig. 4A shows the spatial scalability. The spatial scalability supports a low resolution in the base layer, and the physical configuration for the enhanced layer carries out an up-sampling operation for data information, and carries out a summing operation for an additional differential signal (for only the enhanced layer) and coded information, thereby obtaining a relatively higher resolution signal. Principally, a plurality of data of the base layer can be independently encoded/decoded, respectively. In Fig. 4A, a reference numeral 410 indicates data of the base layer, and a reference numeral 420 indicates data of the enhanced layer. The plurality of data of the base layer are sequentially encoded as indicated by reference numerals 411, 412 and 413 shown in Fig. 4A. (The data encoded by the video CODEC can be represented as a sequence of consecutive still pictures, and one picture is referred to as one frame.) A picture corresponding to image signals of the base layer has the predetermined number of pixels. On the other hand, the reference numeral 420 shown in Fig. 4A indicates the data of the enhanced layer. The physical configuration for the enhanced layer carries out the up-sampling operation for the base layer, and a resolution is enhanced by the additional differential signal, such that a picture larger than the base layer's picture can be decoded. That is, the up-sampling operation is carried out for a picture indicated by the reference numeral 411 shown in Fig. 4A, and the up-sampled picture and the differential signal are summed, such that a picture indicated by the reference numeral 421 is obtained. Further, the up-sampling operation is carried out for a picture indicated by the reference numeral 412 shown in Fig. 4A, and the up-sampled picture and the differential signal are summed, such that a picture indicated by the reference numeral 422 is obtained. Furthermore, there is carried out the up-sampling operation for a picture indicated by the reference numeral 413 shown in Fig. 4A, and the up-sampled picture and the differential signal are summed, such that a picture indicated by the reference numeral 423 is obtained. Resolutions of the enhanced layer's pictures 421, 422 and 423 are a predetermined ratio higher than those of the base layer's pictures 411, 412 and 413. If the base layer's picture and the enhanced layer's picture are displayed on the same display screen, the screen resolution of the enhanced layer becomes better than that of the base layer.

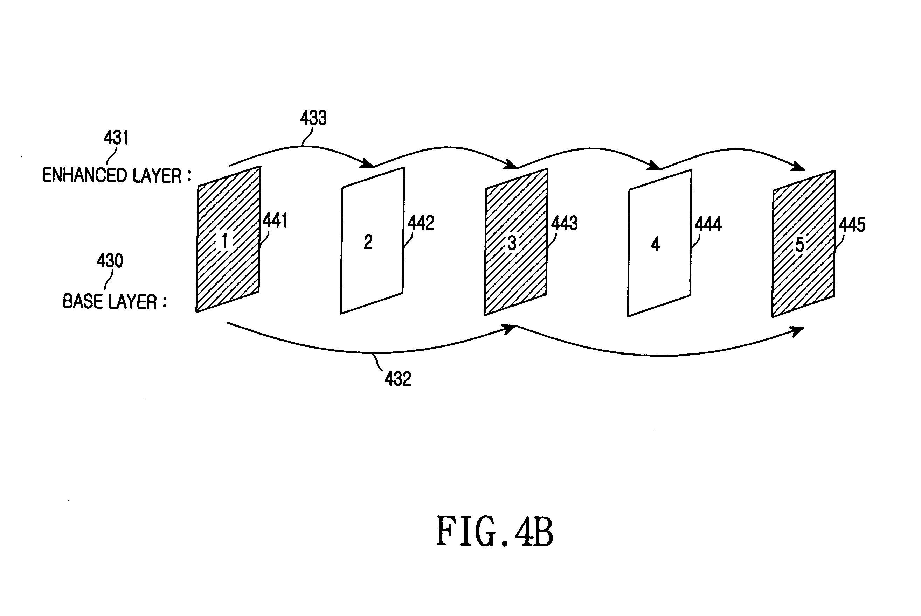

Fig. 4B shows one example of the temporal scalability. The temporal scalability has a function of increasing a temporal resolution while keeping the same spatial resolution. For example, the physical configuration for the base layer encodes only odd video frames among a set of video frames to output the encoded odd video frames, and the physical configuration for the enhanced layer encodes the remaining even video frames to output the encoded even video frames, thereby providing different services using the temporal scalability. A reference numeral 430 shown in Fig. 4B indicates a sequence of the base layer's pictures. The physical configuration for the base layer sequentially outputs only odd frames 441, 443 and 445, while the physical configuration for the enhanced layer additionally outputs only even frames 442 and 444. Thus, a frame rate for the enhanced layer is higher than that for the base layer. That is, the physical configuration for the enhanced layer can provide frames at the higher frame rate as compared with the physical configuration for the base layer.

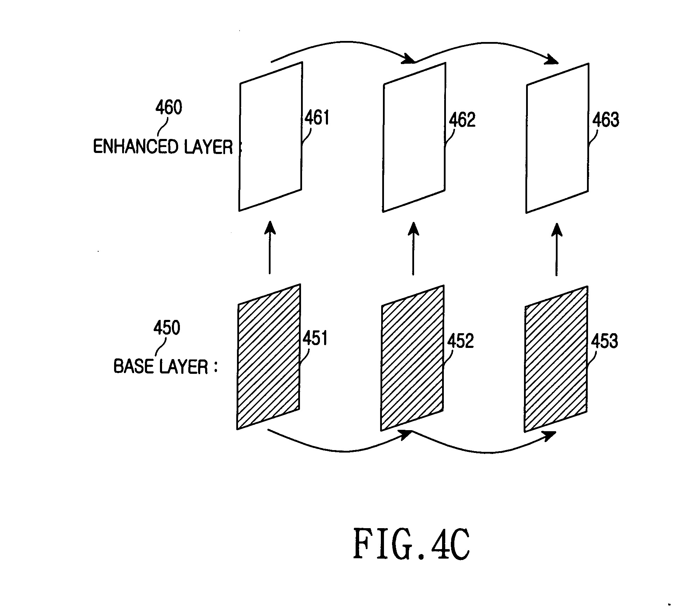

Fig. 4C shows the SNR scalability. The SNR scalability shown in Fig. 4C is similar to the spatial scalability shown in Fig. 4A. However, the SNR scalability is to enhance quality of image along with the constant spatial resolution. Typically, a bandwidth is directly proportional to the quality of image, and an image transmission rate can be controlled by adjusting a quantization interval in the video CODEC. Thus, the physical configuration for the base layer carries out a rough quantization, and the physical configuration for the enhanced layer quantizes a differential signal with a fine quantizer, thereby providing different image qualities. As indicated by a reference numeral 450 shown in Fig. 4C, the physical configuration for the base layer outputs video frames 451, 452 and 453 after the rough quantization. As indicated by a reference numeral 460 shown in Fig. 4C, the physical configuration for the enhanced layer carries out the fine quantization for the video frames 451, 452 and 453, and hence distortions of the video frames 451, 452 and 453 outputted by the physical configuration for the base layer are removed. The physical configuration for the enhanced layer outputs additional information according to the fine quantization, such that relatively higher-quality frames can be obtained. Reference numerals 461, 462 and 463 shown in Fig. 4C indicate video frames after the fine quantization.

At least two bit-streams are generated by the scalability of the video CODEC in an encoding operation. If only one basic bit stream is received, a basic video service can be provided. On the other hand, if all two bit-streams are received, a relatively higher-quality video service can be provided.

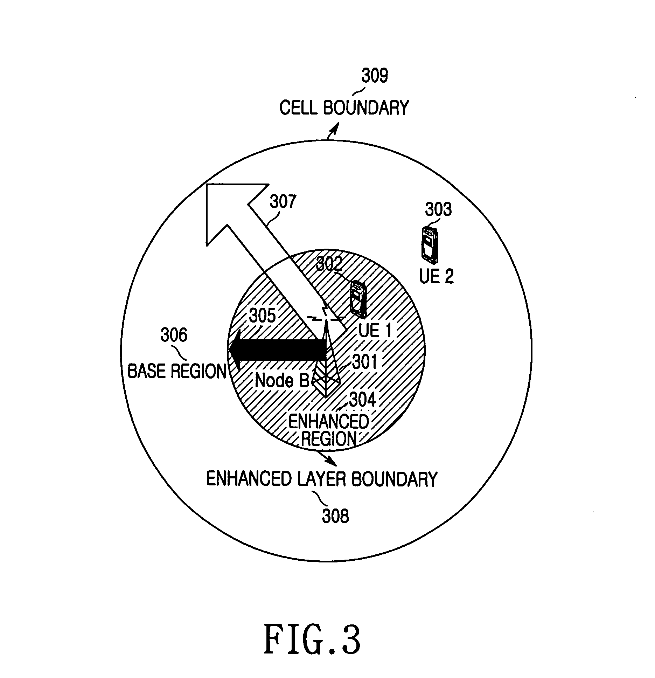

The present invention is intended to propose a technical method and apparatus for a physical layer based on a radio access standard such that the scalability of the multimedia CODEC can be applied in an MBMS. Fig. 3 shows a basic concept associated with a radio access layer for the MBMS based on multiple bit rates using the scalability properties of a video service to address a problem of the excessive consumption of transmission power for a conventional MBMS.

In Fig. 3, a Node-B and UEs for the MBMS, transmission signals, etc. are shown. In Fig. 3, there is shown a form that a Node-B 301 supports a circular service cell. The Node-B 301 provides the MBMS to UE1 302 and UE2 303. The Node-B 301 uses two channels indicated by reference numerals 307 and 305 for one MBMS. The channel 307 carries multimedia information corresponding to the base layer, and the channel 305 carries multimedia information corresponding to the enhanced layer. When assigning transmission power to each channel, the Node-B 301 assigns the transmission power to the channel 307 such that the channel 307 can carry the multimedia information up to the cell boundary 309. Moreover, the Node-B 301 assigns, to the channel 305, the transmission power less than the transmission power of the channel 307. The entire cell area can receive the multimedia information of the base layer through the channel 307. However, part of the cell area can receive not only the multimedia information of the base layer through the channel 307, but also the multimedia information of the enhanced layer through the channel 305. As indicated by a reference numeral 306 shown in Fig. 3, a base region refers to a region that the multimedia information of the base layer can reach within the cell, but the multimedia information of the enhanced layer does not reach within the cell. As indicated by a reference numeral 304 shown in Fig. 3, an enhanced region refers to a hatched region that the multimedia information of the enhanced layer can reach. The UE2 303 located in the base region can decode the multimedia information corresponding to the base layer, such that it can receive a low bit rate-based service. The UE1 302 located in the enhanced region can decode the multimedia information corresponding to the enhanced layer, such that it can receive a relatively higher bit rate-based service.

There are parts to be considered for the MBMS in the above-described method in accordance with the present invention. First, at least two bit-streams being multimedia information corresponding to the base and enhanced layers from a multimedia CODEC are managed by a multicast/broadcast service center (MB-SC). The bit streams are transferred from the MB-SC to a gateway general packet radio service (GPRS) support node (GGSN), a serving GPRS support node (SGSN), a radio network controller (RNC) and a Node-B. The Node-B separates the bit streams and then transmits the separated bit streams to at least one user equipment (UE) through different physical channels. That is, one data item is divided into a plurality of data items, and the data items are transmitted through the same number of physical channels as the number of the data items, respectively. Moreover, when receiving the data items, the UEs must carry out data synchronization associated with the received data items. That is, referring to Fig. 5, the MB-SC 502 has data of at least two bit streams generated by the multimedia CODEC, and the bit stream data is transmitted to a GGSN 505 through an Internet protocol (IP) network. Then, the bit stream data is transferred from the GGSN 505 to an SGSN 507 through a generic tunneling protocol (GTP). Then, the bit stream data is transferred from the SGSN 507 to an RNC 509 using an IP multicast (Iu interface). Then, the RNC 509 transfers the bit stream data to a Node-B 511. The bit stream data from the MB-SC 502 does not need to be separated until it reaches the Node-B 511. However, where the data is transmitted from the Node-B to the UEs through radio physical channels, separated data items are carried on corresponding physical channels, respectively.

Next, there will be described a procedure where arbitrary multimedia data is separated on the basis of the base and enhanced layers and items of the separated data are carried on respective channels such that the Node-B 511 can efficiently assign transmission power for providing a middle data rate (MDR) MBMS as a target of the present invention.

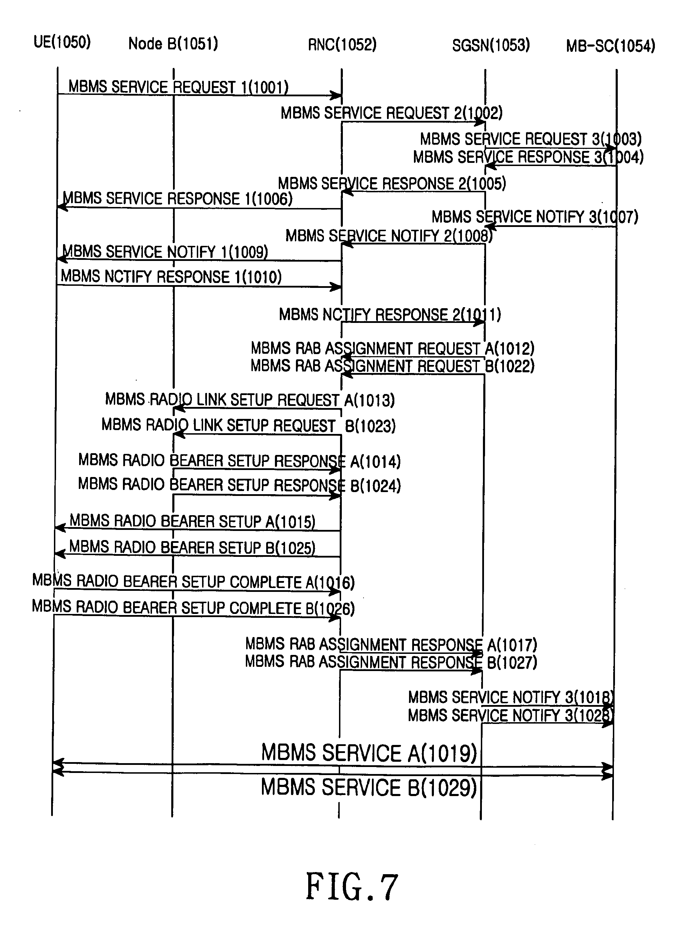

Fig. 7 shows components configuring a mobile communication system supporting the MBMS and messages exchanged between the components in accordance with the present invention. For this example, it is assumed that the number of extendable data items is two multimedia bit streams. Thus, it is assumed that data can be divided into one data item for the base layer and another data item for the enhanced layer.

First, a UE 1050 sends a first MBMS request message (MBMS SERVICE REQUEST 1) for requesting an RNC 1052 to provide an arbitrary MBMS X at step 1001. Here, the first MBMS request message includes an identity of an MBMS desired by the UE 1050, and a user identity being an identity of the UE 1050 sending the first MBMS request message. In response to the first MBMS request message, the RNC 1052 updates RNC service context, which is managed. That is, the RNC 1052 adds, to the RNC service context, the user identity of the UE 1050, the identity of the MBMS requested by the UE 1050, and an identity of a cell to which the UE 1050 belongs, i.e., a cell identity of a Node-B 1051. The RNC 1052 having the added information transmits a second MBMS request message (MBMS SERVICE REQUEST 2) for requesting an SGSN 1053 to provide the MBMS X at step 1002.

The case where the RNC 1052 updates the RNC service context has been described, but the RNC 1052 can newly configure the RNC service context for the MBMS X where the MBMS X requested by the UE 1050 is a new MBMS. The RNC 1052 manages information of the newly configured RNC service context (containing the user identity of the UE 1050 and the identity of the MBMS requested by the UE 1050). Moreover, the second MBMS request message includes the identity of the MBMS requested by the UE 1050 and an identity of the RNC 1052 sending the second MBMS request message.

In response to the second MBMS request message from the RNC 1052, the SGSN 1053 updates the SGSN service context, which is managed. That is, the RNC 1052 adds, to the SGSN service context, the user identity of the UE 1050, the identity of the MBMS requested by the UE 1050, and an identity of the RNC 1052 to which the UE 1050 belongs. The SGSN 1053 having the added information transmits a third MBMS request message (MBMS SERVICE REQUEST 3) for requesting an MB-SC 1054 to provide the MBMS X at step 1003. The case where the SGSN 1053 updates the SGSN service context has been described, but the SGSN 1053 can newly configure the SGSN service context where the MBMS X requested by the UE 1050 is a new MBMS. The SGSN 1053 manages information of the newly configured SGSN service context (containing the identity of the RNC 1052).

The third MBMS request message includes the identity of the MBMS requested by the UE 1050. In response to the third MBMS request message, the MB-SC 1054 transmits, to the SGSN 1053, a third MBMS response message (MBMS SERVICE RESPONSE 3) at step 1004. The third MBMS response message indicates that the third MBMS request message has been appropriately received and the MBMS X has been added to service context on the basis of received information. Here, the third MBMS response message includes the MBMS identity.

In response to the third MBMS response message, the SGSN 1053 transmits, to the RNC 1052, a second MBMS response message (MBMS SERVICE RESPONSE 2) indicating that the third MBMS request message has been appropriately received at step 1005. The second MBMS response message includes the MBMS identity. In response to the second MBMS response message, the RNC 1052 transmits, to the UE 1050, a first MBMS response message (MBMS SERVICE RESPONSE 1) indicating that the second MBMS response message has been appropriately received at step 1006. Here, the first MBMS response message includes the MBMS identity. The UE 1050 receives the first MBMS response message, and waits for other control information to be received from a network.

In a procedure of allowing the UE 1050 to send a service request to the MB-SC 1054 and receive a response to the service request from the MB-SC 1054, a message exchanging process can be performed the same as the conventional message exchanging process shown in Fig. 6.

Then, the MB-SC 1054 notifies the SGSN 1053 that the MBMS X is to be initiated soon and is a middle data rate (MDR) MBMS. Moreover, the MB-SC 1054 transmits a third MBMS notification message (MBMS SERVICE NOTIFY 3) to identify of UEs desiring to actually receive the MBMS X at step 1007. Here, a significant time difference may exist between the above step 1006 and the above step 1007. A target of the above steps 1001 to 1006 is to verify the validation of arbitrary MBMS delivery. Other steps containing the above step 1007 are to perform a procedure used for actually providing the MBMS. In other words, through the above steps 1001 to 1006, the UEs are notified of a schedule associated with an arbitrary MBMS or a plurality of MBMSs. The UEs, having received the notification, determine whether the MBMSs must be received. The UEs transmit a result of the determination to the MB-SC 1054. In response to the result of the determination, the MB-SC 1054 determines whether a corresponding MBMS must be provided. Thus, the above steps 1001 to 1006 are performed before the service is actually provided. The third MBMS notification message includes the MBMS identity, a service initiation time at which the MBMS X is actually initiated, QoS information and an identity indicating the MDR MBMS. Upon receiving the third MBMS notification message, the SGSN 1053 sets up a transmission path for providing the MBMS X and sets up an Iu connection. The transmission path on a network and the Iu connection are set up such that the separated information items can be transmitted after base layer information and enhanced layer information are separated. Moreover, the SGSN 1053 updates the SGSN service context using the received QoS information. Then, the SGSN 1053 notifies the RNC 1052 that the MBMS X will be initiated soon, and identifies UEs desiring to receive the MBMS X. Moreover, the SGSN 1053 transmits, to the RNC 1052, a second MBMS notification message (MBMS SERVICE NOTIFY 2) indicating that the MBMS is to be initiated soon at step 1008. The second MBMS notification message includes the MBMS identity, the service initiation time and the QoS information. Upon receiving the second MBMS notification message, the RNC 1052 identifies the UEs contained in the managed RNC service context and at least one cell to which the UEs belong. Then, the RNC 1052 transmits a first MBMS notification message (MBMS SERVICE NOTIFY 1) at step 1009, so the RNC 1052 notifies the UE 1050 that the MBMS X will be initiated soon. Here, the first MBMS notification message includes the MBMS identity, the service initiation time, the QoS information and an identity indicating the MDR MBMS.

Upon receiving the first MBMS notification message, the UE 1050 determines whether the MBMS X must be actually received. If the UE 1050 desires to receive the MBMS X, the UE 1050 transmits a first MBMS notification response message (MBMS NOTIFY RESPONSE 1) to the RNC 1052 after storing the received QoS information and the identity indicating the MDR MBMS at step 1010. The first MBMS notification response message includes the MBMS identity and the UE identity. In response to the first MBMS notification response message, the RNC 1052 transmits, to the SGSN 1053, a second MBMS notification response message (MBMS NOTIFY RESPONSE 2) indicating that the second MBMS notification message has been appropriately received at step 1011. Upon transmitting the second MBMS notification response message, the RNC 1052 updates the RNC service context by adding, to the RNC service context, an identity of the UE 1050 sending the first MBMS notification message, and an identity of a cell to which the UE belongs, and manages the updated RNC service context. The case where the RNC 1052 receives the first MBMS notification response message from only the UE 1050 at the above step 1010 has been described, but the first MBMS notification message can be received also from a number of the UEs. In this case, the RNC 1052 updates the RNC service context by adding, to the RNC service context, identities of the UEs and identities of cells to which the UEs belong.

The second MBMS notification response message transmitted by the RNC 1052 includes at least one MBMS identity and at least one UE identity. Upon receiving the second MBMS notification response message, the SGSN 1053 updates the managed RNC service context by adding, to the RNC service context, the UE identity and the RNC identity contained in the second MBMS notification response message. Moreover, the SGSN 1053 transmits, to the RNC 1052, MBMS radio access bearer (RAB) assignment request messages (MBMS RAB ASSIGNMENT REQUEST A and MBMS RAB ASSIGNMENT REQUEST B) needed for setting up transmission paths for transmitting two streams associated with the MBMS X, i.e., RABs, at steps 1012 and 1022. Since two separated streams must be transmitted for one service, two RAB assignment request messages are separately transmitted. That is, for example, one message (at the above step 1012) for the base layer and another message (at the above step 1022) for the enhanced layer are transmitted to the RNC 1052. The RAB assignment request messages include the MBMS identity and the QoS information, layer information of the MDR MBMS (indicating whether it is associated with the base layer or the enhanced layer), respectively. Upon receiving the RAB assignment request messages, the RNC 1052 identifies the identities of cells and UEs contained in the RNC service context. Then, the RNC 1052 prepares the setup of two radio links for use in the cell, i.e., the Node-B 1051 on the basis of the received QoS information.

The RNC 1052 transmits MBMS radio link setup request messages (MBMS RADIO LINK SETUP REQUEST A and MBMS RADIO LINK SETUP REQUEST B) for requesting the Node-B 1051 to set up the two radio links such that the two separated streams for the MBMS X can be transmitted at steps 1013 and 1023. Here, the MBMS radio link setup request messages are separately transmitted on the basis of the base and enhanced layers. In order for one of the two data streams associated with the MBMS X to be transmitted, each message includes channelization code information, scrambling code information, at least one slot format number, channel coding information, etc. to be applied to a downlink data channel (being a physical channel for the MBMS equal to the PBMSCH described in conjunction with Fig. 2). The Node-B 1051, having received the two radio link setup request messages, sets up two downlink data channels using the channelization code information and the scrambling code information contained in the radio link setup request messages, and completes the preparation of receiving an uplink dedicated channel. The Node-B 1051 transmits, to the RNC 1052, radio link setup response messages (MBMS RADIO LINK SETUP RESPONSE A and MBMS RADIO LINK SETUP RESPONSE B) indicating that the radio link setup has been performed at steps 1014 and 1024. The radio link setup response messages must be separately transmitted on the basis of the base and enhanced layers.

The RNC 1052, having received the radio link setup response messages, requests the UEs, belonging to the Node-B 1051, to set up two radio bearers. That is, in conjunction with Fig. 7, the RNC 1052 transmits radio bearer setup messages (MBMS RADIO BEARER SETUP A and MBMS RADIO BEARER SETUP B) to UE 1050 for requesting the UE 1050 to set up the two radio bearers at steps 1015 and 1025. The radio bearer setup messages also must be separately transmitted on the basis of the base and enhanced layers. Each radio bearer setup message includes channelization code information, scrambling code information, at least one slot format number, etc. associated with the downlink data channel. The UE 1050 completes the preparation for receiving the downlink data channel and the downlink informal dedicated control channel with the information contained in the radio bearer setup messages, and sets up the uplink dedicated channel. The UE 1050 having set up the uplink dedicated channel transmits, to the RNC 1052, bearer setup completion messages (MBMS RADIO BEARER SETUP COMPLETE A and MBMS RADIO BEARER SETUP COMPLETE B) indicating that the radio bearer setup has been completed at steps 1016 and 1026. The radio bearer setup completion messages also are separately transmitted on the basis of the base and enhanced layers. The radio bearer setup completion messages include an MBMS identity and a user identity, respectively. The RNC 1052 updates the managed RNC service context by adding an identity of the UE 1050 sending the radio bearer setup completion messages to the RNC service context. Then, the RNC 1052 having updated the RNC service context transmits, to the SGSN 1053, MBMS RAB assignment response messages (MBMS RAB ASSIGNMENT RESPONSE A and MBMS RAB ASSIGNMENT RESPONSE B) indicating that the transmission paths of the MBMS X have been completely configured at steps 1017 and 1027. The MBMS RAB assignment response messages also are separately transmitted on the basis of the base and enhanced layers. The MBMS RAB assignment response messages include the MBMS identity and the UE identity. Upon receiving the MBMS RAB assignment response messages, the SGSN 1053 updates the managed SGSN service context by adding, to the SGSN service context, the identities of the UEs contained in the MBMS RAB assignment response messages. The SGSN 1053 having updated the SGSN service context transmits, to the MB-SC 1054, third MBMS notification response messages (MBMS NOTIFY RESPONSE 3) indicating that the preparation for receiving the MBMS X has been completed at steps 1018 and 1028. The third MBMS notification response messages include the MBMS identity. The MB-SC 1054 of the mobile communication system having performed the above steps 1001 to 1028, provides the two separated streams for the MBMS X to the UE 1050, after receiving the third MBMS notification response messages, at steps 1019 and 1029.

Where the MDR MBMS is provided in the above-described embodiment, data synchronization associated with the separated data items must be considered. If the data streams separated by the MB-SC have been transmitted to the UE through different paths and channels, the UE capable of receiving a data stream of the enhanced layer combines the data streams received through at least two paths in an application layer. The UE can receive a better quality service in the case where the data streams are combined in the application layer, in comparison with the case where the UE receives only the data stream of the base layer. Moreover, the UE must recognize temporal synchronous information associated with the separated data streams in a procedure of combining the data streams such that the quality of a received multimedia service can be improved.

There will be described a procedure where the MB-SC transmits at least two separated data streams for the MDR MBMS, and the UE located in the enhanced region must carry out data synchronization associated with the separated data streams when receiving all separated data streams through the respective channels, as an example.

In a second embodiment, there will be described a procedure of enabling UE, having received enhanced layer data, to carry out data synchronization associated with two separated data streams using a well-known real-time protocol (RTP).

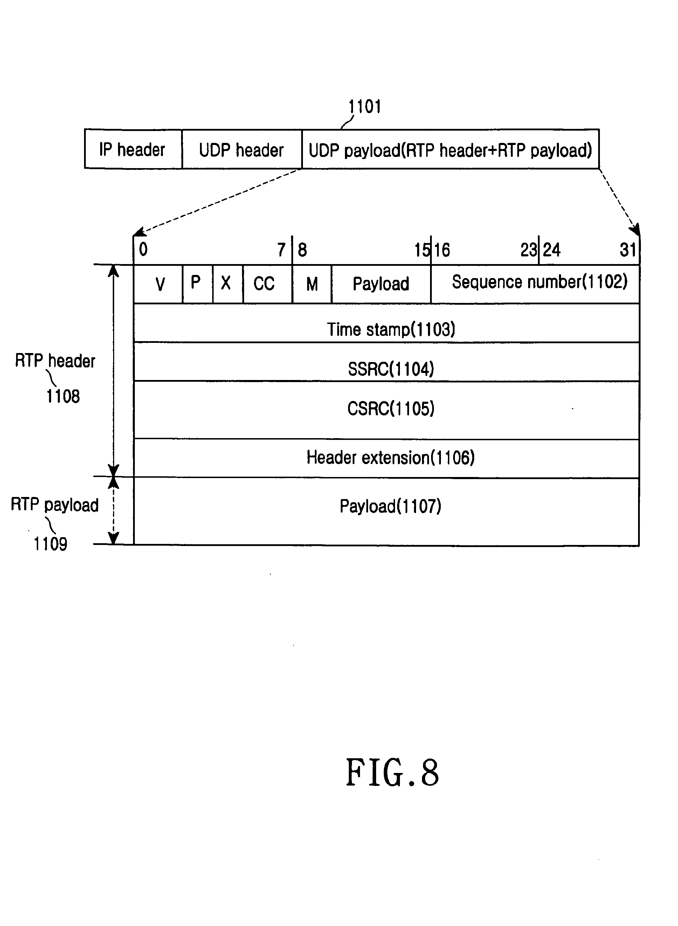

The RTP has been developed in accordance with a need for providing a video conference service in which a plurality of persons participate. Moreover, the RTP is used for data requiring real time characteristics such as voice, video or simulation data in a point-to-point communication. The RTP does not support the service quality guarantee or reliability, but is frequently used for applications requiring synchronization between mediums handling real-time information. Fig. 8 shows a format of a real-time protocol (RTP) packet.

The first 12 octets (96 bits) as a fixed header in the RTP packet are commonly included in every RTP packet. A contributing source (CSRC) identifier field is present in a new RTP packet generated by a mixer. The first two bits of the header indicate a version (V) number of the RTP. A padding (P) bit indicates whether there are additional padding bits, which are not part of a payload 1107 of the RTP packet. An extension (X) bit indicates whether the fixed header of the first 12 octets is followed by a header extension 1106. CSRC count (CC) bits indicate the number of CSRC identifiers, which follow the fixed header. An M bit can be variously used. As an example, the M bit is used for a significant mark indicating a frame arrangement in an RTP packet stream. A payload type indicates a type of information contained in an RTP payload. A sequence number 1102 is incremented by one for each RTP data packet sent, and may be used by a receiver to detect packet loss and to restore packet sequence. A default value of the sequence number is randomly selected. A time stamp 1103 indicates a sampling time of the first octet in information contained in the payload 1107 of the RTP data packet. Moreover, the time stamp 1103 is used for synchronization between mediums or within one medium and for calculating delay variation.

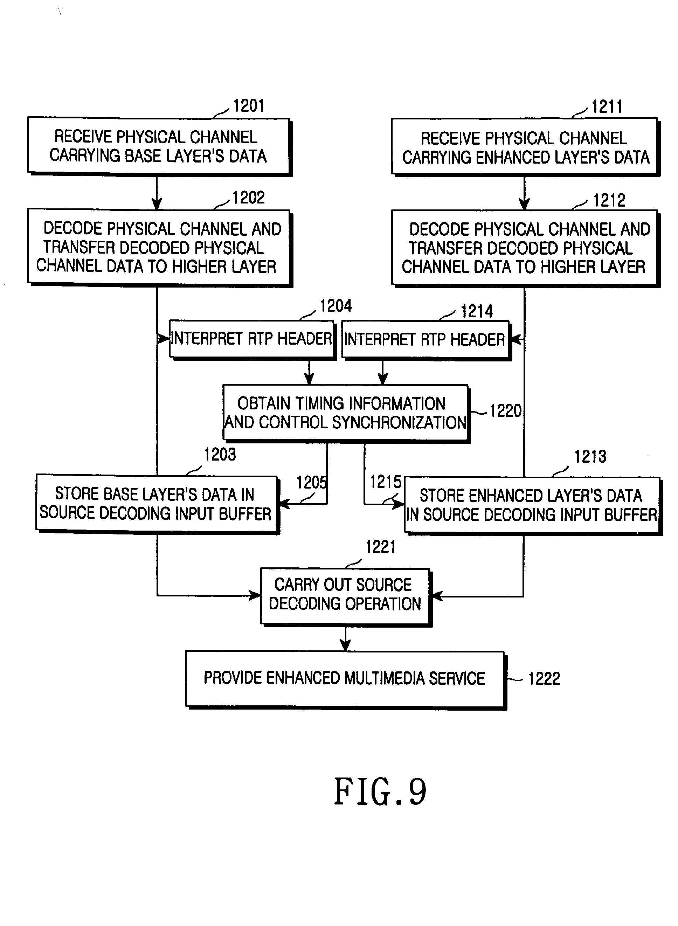

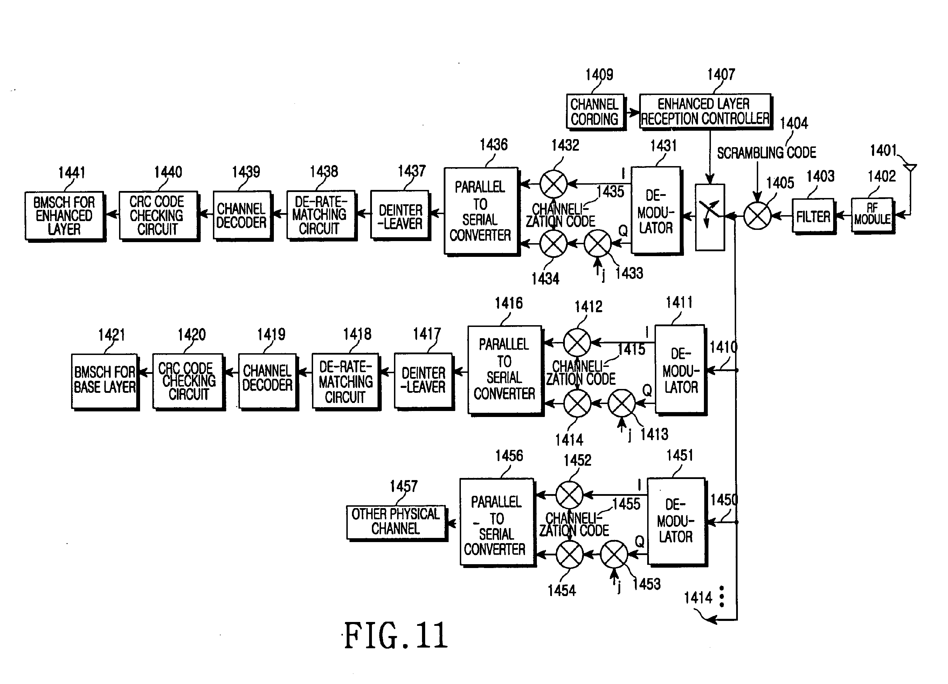

Fig. 9 shows a procedure of allowing UE to receive data items associated with the base layer and the enhanced layer and to combine the data items where the above-described RTP is used for the MDR MBMS. At step 1201, the UE receives a physical channel (physical channel signal or data) corresponding to the base layer. The received physical channel data of the base layer is decoded and the decoded physical channel data is transferred to a higher layer at step 1202. The above steps 1201 and 1202 will be described in detail with reference to Fig. 11, which shows a hardware structure of a receiver. The UE receives the physical channel data corresponding to the enhanced layer at step 1211, and decodes the received physical channel data to transmit the decoded physical channel data to the higher layer at step 1212.

The decoded physical channel data corresponding to the base layer is transferred to an RTP layer at the above step 1202, and the RTP layer interprets RTP header information from the decoded physical channel data at step 1204. As shown in Fig. 8, the RTP header information includes the time stamp, the CSRC identifiers, etc. The UE can find real-time information associated with the base layer by performing the above step 1204. At step 1203, the UE stores the base layer's data, transferred at the above step 1202, in a source decoding input buffer while interpreting the RTP header information.

At step 1214, the RTP layer interprets RTP header information associated with the enhanced layer from the decoded physical channel data transferred at the above step 1212, thereby allowing the UE to find real-time information associated with the enhanced layer. At step 1213, the UE stores the enhanced layer's data, transferred at the above step 1212, in a source decoding input buffer while interpreting the RTP header information.

The real-time information associated with the base layer interpreted at the above step 1204 and the real-time information associated with the enhanced layer interpreted at the above step 1214 are inputted to a controller for obtaining time information and synchronization at step 1220. The controller controls the buffer for storing the enhanced layer's data at the above step 1213 and the buffer for storing the base layer's data at the above step 1203, and performs the synchronization associated with two separated data. At the above step 1220, the UE sends a control signal 1205, thereby controlling the source decoding input buffer for the base layer's data. Further, at the above step 1220, the UE sends a control signal 1215, thereby controlling the source decoding input buffer for the enhanced layer's data. At step 1221, the UE carries out a source decoding operation for an output of the buffer outputted at the above step 1203 and an output of the buffer outputted at the above step 1213 such that an output for one service is enabled. At the source decoding operation, a combiner (not shown) combines the base layer's data and the enhanced layer's data. As a result of the source decoding operation at the above step 1221, an enhanced multimedia service is provided in step 1222. Typically, the multimedia service can be a moving picture service. Optionally, the multimedia service can support an audio service and other service.

As properties of the MDR MBMS, two data items are separated from one data item, and the separated data items are transferred from the MB-SC to the UE through different paths. At least two data items are separated from one data item by a physical layer, and the separated data items are transmitted to the UE through different physical channels. The base layer's data is transmitted by relatively higher transmission power such that at least one UE in the entire cell can receive the base layer's data, and the enhanced layer's data is transmitted by relatively lower transmission power such that only at least one UE in the enhanced region can receive the enhanced layer's data. In the above-described method, a level of transmission power to be assigned to a physical channel for the enhanced layer must be specified. Levels of transmission power assigned to physical channels for the base and enhanced layers are different, so the number of physical channels capable of being received by UEs becomes different. That is, as the UE moves farther from the Node-B, the UE can receive only the base layer's data. On the other hand, as the UE moves nearer to the Node-B, the UE can receive not only the base layer's data, but also the enhanced layer's data. Next, a method for assigning the transmission power for the enhanced layer and a method for determining whether the UE must receive the physical channel for the enhanced layer will be described in embodiments.

A third embodiment describes a method for assigning the transmission power in the Node-B, as an example. A total amount of transmission power is designated in the Node-B. The transmission power used for physical channels transmitted by the Node-B cannot exceed the designated total amount of transmission power.

Upon providing an arbitrary MDR MBMS, the Node-B first assigns the transmission power to a physical channel such that all UEs located in a corresponding cell can receive the physical channel carrying the base layer's data. The Node-B flexibly assigns the transmission power to another physical channel for the enhanced layer's data. There can be a method for keeping the transmission power associated with the physical channel carrying the base layer's data in a constant ratio. Another method varies a level of the transmission power for voice communication or packet data communication, thereby varying a level of the transmission power to be assigned to the physical channel for the enhanced layer's data of the MDR MBMS on the basis of the varied transmission power level. The latter method can more effectively use the transmission power of the Node-B, but a maximum range of transmission power for the enhanced layer's data to be received by the UE can vary with time.

Another method assigns the transmission power for the enhanced layer's data according to the number of UEs. This method transmits the physical channel for the enhanced layer's data using an appropriate transmission power level through an antenna providing a transmission beam of another type different from a conventional transmission beam, in a high-density region covering many UEs.

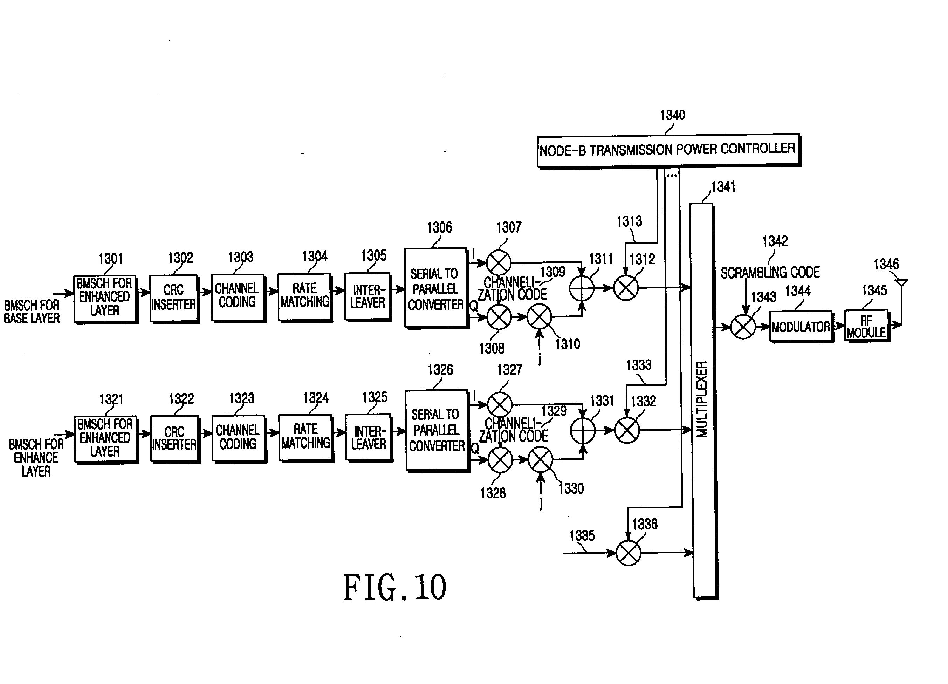

The above-described transmission power assignment methods will be described with reference to a hardware structure of a transmitter shown in Fig. 10. Referring to Fig. 10, one transport channel 1301 for the base layer's data is transmitted from the MB-SC to the Node-B. The base layer's data contains time stamp information for allowing a receiver to obtain timing information. The transport channel (broadcast and multicast shared channel (BMSCH)) undergoes the following processing in a physical layer. A cyclic redundancy check (CRC) inserter 1302 inserts a CRC value into the transport channel, and then the channel coder 1303 carries out a channel coding operation for error correction. Then, a rate matcher 1304 carries out a rate matching operation for an output of the channel coder 1303 on the basis of a physical channel length. An output of the rate matcher 1304 forms one coded composite transport channel (CCTrCH). The MDR MBMS is characterized in that respective data items, i.e., the base layer's data and the enhanced layer's data, configure independent CCTrCHs in the physical layer, respectively, since at least two data items must be separated and transmitted. An interleaver 1305 carries out an interleaving operation for the CCTrCH being the output of the rate matcher 1304. The CCTrCH interleaved by the interleaver 1305 is converted into a physical channel (physical broadcast and multicast shared channel (PBMSCH)) for the BMSCH for the base layer. The physical channel is divided into an I channel and a Q channel by a serial to parallel converter 1306. Spreaders 1307 and 1308 carry out spreading operations for the I and Q channels by multiplying the I and Q channels by a channelization code 1309. A multiplier 1310 multiplies the spread Q channel from the spreader 1308 by a complex component, and then an adder 1311 adds the Q channel from the multiplier 1310 to the I channel from the spreader 1307. The above-described processing of the elements 1306 to 1311 corresponds to a typical quadrature phase shift keying (QPSK) modulation. A multiplier 1312 multiplies a modulated signal as a result of the addition by a channel gain. A level of transmission power assigned to the physical channel for the base layer's data depends upon the channel gain. The transmission power is controlled by a Node-B transmission power controller 1340. The above-described physical channel must be able to carry the base layer's data to the cell boundary. Thus, the Node-B transmission power controller 1340 outputs, to the multiplier 1312, a value of the channel gain for the base layer's data indicated by a reference numeral 1313. The modulated signal multiplied by the channel gain value is inputted into a multiplexer 1341.

On the other hand, one transport channel 1321, shown in Fig. 10, for the enhanced layer's data is transmitted from the MB-SC to the Node-B. The enhanced layer's data contains time stamp information for allowing a receiver to obtain timing information. The transport channel (broadcast and multicast shared channel (BMSCH)) undergoes the following processing in a physical layer. A cyclic redundancy check (CRC) inserter 1322 inserts a CRC value into the transport channel, and then the channel coder 1323 carries out a channel coding operation for error correction. Then, a rate matcher 1324 carries out a rate matching operation for an output of the channel coder 1323 on the basis of a physical channel length. An output of the rate matcher 1324 forms one coded composite transport channel (CCTrCH). As described above, the base layer's data and the enhanced layer's data are for one service, but they configure independent CCTrCHs in the physical layer, respectively. An interleaver 1325 carries out an interleaving operation for the CCTrCH being the output of the rate matcher 1324. The CCTrCH interleaved by the interleaver 1325 is converted into a physical channel (physical broadcast and multicast shared channel (PBMSCH)) for the BMSCH for the enhanced layer. The physical channel is divided into an I channel and a Q channel by a serial to parallel converter 1326. Spreaders 1327 and 1328 carry out spreading operations for the I and Q channels by multiplying the I and Q channels by a channelization code 1329. A multiplier 1330 multiplies the spread Q channel from the spreader 1328 by a complex component, and then an adder 1331 adds the Q channel from the multiplier 1310 to the I channel from the spreader 1327. The above-described processing of the elements 1326 to 1331 corresponds to the typical QPSK modulation. A multiplier 1332 multiplies a modulated signal as a result of the addition by a channel gain. A level of transmission power assigned to the physical channel for the enhanced layer's data depends upon the channel gain. The transmission power is controlled by the Node-B transmission power controller 1340. Since the above-described physical channel carries the enhanced layer's data, an appropriate level of transmission power for the enhanced layer's data must be designated. Thus, the Node-B transmission power controller 1340 outputs, to the multiplier 1332, a value of the channel gain for the enhanced layer's data indicated by a reference numeral 1333. The modulated signal multiplied by the channel gain value is inputted into the multiplexer 1341.

The physical channel configuration for the base layer's data and another physical channel configuration for the enhanced layer's data have been described in conjunction with Fig. 10, but the configuration of at least three physical channels can be implemented by the above-described method. That is, where one physical channel for the base layer's data and at least two physical channels for the enhanced layer's data are configured, each of the physical channels for the enhanced layer's data can be configured by the elements 1321 to 1341. The second enhanced layer channel 1335 is amplified by amplifier 1336 under control of Node-B Transmission Power Controller 1340.

The multiplexer 1341 multiplexes all physical channels to produce one output. A spreader 1343 carries out a scrambling operation by multiplying the output of the multiplexer 1341 by a scrambling code 1342. A modulator 1344 modulates a scrambled signal as a result of the scrambling, and then a radio frequency (RF) module 1345 converts the modulated signal into an RF signal. An antenna 1346 transmits the RF signal by radio.

Next, an operation of a UE receiving the MDR MBMS and a hardware structure of the UE will be described. A fourth embodiment describes a method for enabling the UE, contained in a cell delivering the MDR MBMS, to receive and process the service, as one example. Even though the UE exists at any location within the cell delivering the MDR MBMS, the UE can receive the physical channel for the base layer's data. Simultaneously, the reception of the physical channel for the enhanced layer's data is determined by a distance between the UE and a corresponding Node-B. Accordingly, the UE determines whether the enhanced layer's data can be received, and then must determine whether it will receive only the base layer's data or both data of the base and enhanced layers.

The simplest method is that the UE always receives the enhanced layer's data if it can receive the enhanced layer's data. In this case, where the UE is located in the enhanced region as the UE 302 shown in Fig. 3, it can receive the enhanced layer's data. On the other hand, where the UE is located in the base region as the UE 303 shown in Fig. 3, a CRC-related error is detected when the physical channel for the enhanced layer's data is received, and hence the UE can receive only the base layer's data. Other methods are also contemplated.

Another method is that the Node-B informs the UE of a ratio of transmission power assigned to the enhanced layer's data and transmission power assigned to a common pilot channel (CPICH). The method for informing the UE of the transmission power ratio uses a broadcast channel (BCH) or forward access channel (FACH). If a dedicated channel is set up between the UE and the Node-B, the Node-B can inform the UE of the transmission power ratio through the dedicated channel. Through the above-described method, the UE can identify a value of the transmission power assigned to the enhanced layer's data using the transmission power ratio. That is, since the UE can measure reception power of the CPICH, the UE can measure reception power of the physical channel for the enhanced layer's data from the measured reception power of the CPICH, thereby appropriately determining whether the UE can receive the physical channel for the enhanced layer's data.

The above-described two methods are associated with procedures of determining whether the UE can receive the physical channel for the enhanced layer's data, as examples. Next, a procedure of receiving the physical channel for the enhanced layer's data will be described with reference to Fig. 11.

Fig. 11 shows a hardware structure of the UE receiving the MDR MBMS. An RF module 1402 converts a frequency of an RF signal received through a reception antenna 1401. That is, the RF module 1402 converts a high-frequency band signal to a low-frequency band signal. A filter 1403 outputs a desired frequency signal. A descrambler (despreader) 1405 multiplies the signal by a scrambling code 1404, thereby allowing the UE to sort the signal from the Node-B. The scrambling code 1404 shown in Fig. 11 must be the same as the scrambling code 1342 shown in Fig. 10 such that the UE shown in Fig. 11 can communicate with the Node-B shown in Fig. 10. An output of the descrambler 1405 is inputted into a demodulator 1411, which performs QPSK demodulation. I and Q channels are separated from the output of the descrambler 1405 by the demodulator 1411. Then, a despreader 1412 multiplies the separated I channel by a channelization code 1415. A multiplier 1413 multiplies the separated Q channel by a complex value. A multiplier 1414 multiplies an output of the multiplier 1413 by the channelization code 1415. A parallel to serial converter 1416 converts the I and Q channels multiplied by the channelization code 1415 into a physical channel for the base layer's data. The channelization code 1415 shown in Fig. 11 must be the same as the channelization code 1309 shown in Fig. 10. Since the physical channel for the base layer's data can be received in an entire cell area covered by the Node-B, the UE can always receive and decode the physical channel for the base layer's data. The physical channel for the base layer's data undergoes a deinterleaving operation by a deinterleaver 1417, a de-rate-matching operation by a de-rate-matching circuit 1418 and a channel decoding operation by a channel decoder 1419 in turn. After the channel decoding operation, the base layer's data undergoes a CRC code checking operation by a CRC code checking circuit 1420. If an error does not exist as a result of the CRC code checking operation, a transport channel 1421 for the base layer's data being a broadcast and multicast shared channel (BMSCH) is obtained.

On the other hand, where the output of the descrambler 1405 is inputted into a switch 1406, it is inputted into a demodulator 1431, if the switch 1406 has been turned on various sample operations discussed above. I and Q channels are separated from an output of the descrambler 1405 including input symbols through QPSK demodulation by a demodulator 1431. Then, a despreader 1432 multiplies the separated I channel by a channelization code 1435. A multiplier 1433 multiplies the separated Q channel by a complex value. A multiplier 1434 multiplies an output of the multiplier 1433 by the channelization code 1435. A parallel to serial converter 1436 converts the I and Q channels multiplied by the channelization code 1435 into a physical channel for the enhanced layer's data. The channelization code 1435 shown in Fig. 11 must be the same as the channelization code 1329 shown in Fig. 10. The physical channel for the enhanced layer's data undergoes a deinterleaving operation by a deinterleaver 1437, a de-rate-matching operation by a de-rate-matching circuit 1438 and a channel decoding operation by a channel decoder 1439 in turn. After the channel decoding operation, the enhanced layer's data undergoes a CRC code checking operation by a CRC code checking circuit 1440. If an error does not exist as a result of the CRC code checking operation, a transport channel 1441 for the enhanced layer's data being a broadcast and multicast shared channel (BMSCH) is obtained.

In the first method for enabling the UE to determine the reception of the enhanced layer's data, the UE determines whether the physical channel has been received without an error through the CRC code checking operation by the CRC code checking circuit 1440. If the error in the physical channel has not been detected as a result of the determination, the base layer's data and the enhanced layer's data are transferred to a higher layer such that an enhanced layer service can be provided. On the other hand, if the error in the physical channel has been detected as the result of the determination, only the base layer's data is transferred to the higher layer such that a base layer service can be provided.

On the other hand, in the second method for enabling the UE to determine the reception of the enhanced layer's data, i.e., the method that the Node-B informs the UE of transmission power of the physical channel for the enhanced layer's data, the UE predicts reception power of a received PBMSCH using reception power of a received CPICH and a ratio of CPICH transmission power and PBMSCH transmission power indicated by a reference numeral 1409 of which the Node-B previously informed the UE. In this case, an enhanced layer reception controller 1407 determines whether the UE can receive the physical channel (PBMSCH) for the enhanced layer's data using the reception power of the received PBMSCH, and controls the switch 1406. That is, if the enhanced layer reception controller 1407 determines that the UE can receive the physical channel (PBMSCH) for the enhanced layer's data, the controller enables the switch 1406 to be turned on. On the other hand, if the enhanced layer reception controller 1407 determines that the UE cannot receive the physical channel (PBMSCH) for the enhanced layer's data, the controller enables the switch 1406 to be turned off.

In Fig. 11, a physical channel 1457 obtained through a channelization code 1455 can be considered as another physical channel for other data associated with an MDR MBMS or as another physical channel for other services other than the MBMS. There are a number of physical channels for other purposes as indicated by a reference numeral 1458. The operation of elements 1450-1457 and 1414 are sililar to the functions of similar elements discussed above.

As apparent from the above description, the present invention provides a method for providing one multimedia broadcast and multicast service (MBMS) using the scalability of a multimedia CODEC, at least two radio bearers, and at least two physical channels. In accordance with the present invention, an excessive consumption of transmission power of a Node-B can be prevented and hence the transmission power of the Node-B can be efficiently used. Further, in accordance with the present invention, the increased number of services can be provided. Furthermore, the present invention can flexibly assign power resources for services other than the MBMS.

Although the preferred embodiments of the present invention have been disclosed for illustrative purposes, those skilled in the art will appreciate that various modifications, additions and substitutions are possible, without departing from the scope of the invention. Therefore, the present invention is not limited to the above-described embodiments, but the present invention is defined by the claims which follow, along with their full scope of equivalents.

**Claims**

1.  A method for transmitting data from a Node-B to a first user equipment (UE) located within at least one second cell area covered by the Node-B and a second UE located within a first cell area covered by the Node-B, the first cell area including the second cell area, the first cell area including a cell boundary and the second cell area, comprising the steps of:

    transmitting base data to the second UE at a power level that allows UEs located at the cell boundary of the first cell area to receive the base data, wherein the base data includes encoded base data; and
    transmitting the enhanced data to the first UE at a power level that allows UEs located within the second cell area to receive enhanced data for supplementing the base data, wherein the first UE can receive higher-quality data in comparison with the second UE by receiving all the base data and the enhanced data.

2.  The method as set forth in claim 1, wherein the base data and the enhanced data transmitted by the Node-B include timing information for data synchronization.

3.  The method as set forth in claim 2, wherein the power level for transmitting the enhanced data is less than the power level for transmitting the base data.

4.  The method as set forth in claim 3, wherein the transmission power level for transmitting the enhanced data is assigned according to the number of UEs located within the second cell area.

5.  A method for separately transmitting a base data stream and an enhanced data stream for supplementing the base data stream through independent channels from a Node-B of a mobile communication system, which receives the base data stream and the enhanced data stream as data corresponding to one service and provides the base data stream and the enhanced data stream to user equipments (UEs) located within a cell, the method comprising the steps of:

    transmitting the base data stream at a first transmission power level that allows the UEs located within the cell to receive the base data stream; and
    transmitting the enhanced data stream at a second transmission power level that is less than the first transmission power level.

6.  The method as set forth in claim 5, wherein the base data stream and the enhanced data stream transmitted by the Node-B include timing information for data synchronization.

7.  A method for receiving at a user equipment (UE) base data and enhanced data for supplementing the base data transmitted through different channels by a Node-B, the base data and the enhanced data being separated from predetermined data, the method comprising the steps of:

    if the base data and the enhanced data are received, combining first data generated by decoding the base data and second data generated by decoding the enhanced data, and outputting the combined first and second data; and
    if only the base data is received, decoding only the base data and outputting the decoded base data.

8.  The method as set forth in claim 7, wherein the step of combining the first data and the second data is carried out by combining the first data and the second data on the basis of timing information contained in the base data and the enhanced data.

9. The method as set forth in claim 7, wherein the step of decoding the enhanced data is carried out by decoding the received enhanced data only where an error is not detected in a cyclic redundancy check (CRC) code checking operation for the enhanced data.

10. An apparatus for transmitting predetermined data to user equipments (UEs) located within a first area including a second area, the first area receiving the data transmitted by a Node-B, comprising:

   a first transmitter for transmitting enhanced data at a transmission power level that allows UEs located within the second area to receive the enhanced data, wherein the transmitted data is separated into base data and the enhanced data for supplementing the base data; and
   a second transmitter for transmitting the base data at a transmission power level that allows the UEs located within the first area to receive the base data.

11. The apparatus as set forth in claim 10, wherein the Node-B transmits the base data and the enhanced data containing timing information for data synchronization.

12. The apparatus as set forth in claim 11, further comprising:

   a controller for controlling transmission power of the first transmitter for transmitting the enhanced data and transmission power of the second transmitter for transmitting the base data.

13. The apparatus as set forth in claim 12, wherein the first transmitter assigns the transmission power for the enhanced data according to the number of UEs located within the second area.

14. An apparatus for receiving at user equipment (UE) base data and enhanced data, the UE including decoders for separating the base data and the enhanced data from predetermined data and individually decoding the base data and the enhanced data transmitted through different channels by a Node-B, the apparatus comprising:

   means for receiving first decoded data outputted by decoding the base data and second decoded data outputted by decoding the enhanced data, and obtaining timing information of the first and second decoded data; and
   a combiner for receiving the first decoded data and the second decoded data and combining the first decoded data and the second decoded data on the basis of the timing information.

15. The apparatus as set forth in claim 14, wherein the combiner outputs the first decoded data when receiving only the first decoded data.

16. The apparatus as set forth in claim 14, further comprising:

   a cyclic redundancy check (CRC) code checking circuit for CRC code checking the enhanced data, wherein the enhanced data is decoded only where an error is not detected in the CRC code checking operation for the enhanced data.

FIG.1

EP 1 359 782 A1

2560 chips,20 * $2^k$ bits(k=0,...,6) — 202

BMSCH DATA

201

| Slot #0 | Slot #1 | • • • | Slot #i | • • • | Slot #14 | PBMSCH |

1 radio frame,10ms

# FIG.2

FIG.3

309 CELL BOUNDARY

303 UE 2

302 UE 1

301 Node B

304 ENHANCED REGION

305

307

306 BASE REGION

308 ENHANCED LAYER BOUNDARY

FIG. 4A

EP 1 359 782 A1

431
ENHANCED LAYER :

433

430
BASE LAYER :

441

442

443

444

445

432

FIG.4B

EP 1 359 782 A1

**460** ENHANCED LAYER

**461**  **462**  **463**

**450** BASE LAYER :

**451**  **452**  **453**

FIG.4C

FIG.5

EP 1 359 782 A1

EP 1 359 782 A1

UE(650)　　　Node B(651)　　　RNC(652)　　　SGSN(653)　　　MB-SC(654)

MBMS SERVICE REQUEST 1(601)

MBMS SERVICE REQUEST 2(602)

MBMS SERVICE REQUEST 3(603)

MBMS SERVICE RESPONSE 3(604)

MBMS SERVICE RESPONSE 2(605)

MBMS SERVICE RESPONSE 1(606)

MBMS SERVICE NOTIFY 3(607)

MBMS SERVICE NOTIFY 2(608)

MBMS SERVICE NOTIFY 1(609)

MBMS NCTIFY RESPONSE 1(610)

MBMS NCTIFY RESPONSE 2(611)

MBMS RAB ASSIGNMENT REQUEST(612)

MBMS RADIO LINK SETUP REQUEST(613)

MBMS RADIO LINK SETUP RESPONSE(614)

MBMS RADIO BEARER SETUP(615)

MBMS RADIO BEARER SETUP COMPLETE(616)

MBMS RADIO ASSIGNMENT RESPONSE(617)

MBMS NOTIFY RESPONSE 3(618)

MBMS SERVICE X(619)

FIG.6

UE(1050)　　Node B(1051)　　　　　RNC(1052)　　　　SGSN(1053)　　MB-SC(1054)

MBMS SERVICE REQUEST 1(1001)

MBMS SERVICE REQUEST 2(1002)

MBMS SERVICE REQUEST 3(1003)
MBMS SERVICE RESPONSE 3(1004)

MBMS SERVICE RESPONSE 2(1005)
MBMS SERVICE RESPONSE 1(1006)

MBMS SERVICE NOTIFY 3(1007)
MBMS SERVICE NOTIFY 2(1008)

MBMS SERVICE NOTIFY 1(1009)
MBMS NCTIFY RESPONSE 1(1010)

MBMS NCTIFY RESPONSE 2(1011)

MBMS RAB ASSIGNMENT REQUEST A(1012)
MBMS RAB ASSIGNMENT REQUEST B(1022)

MBMS RADIO LINK SETUP REQUEST A(1013)
MBMS RADIO LINK SETUP REQUEST B(1023)

MBMS RADIO BEARER SETUP RESPONSE A(1014)
MBMS RADIO BEARER SETUP RESPONSE B(1024)

MBMS RADIO BEARER SETUP A(1015)
MBMS RADIO BEARER SETUP B(1025)

MBMS RADIO BEARER SETUP COMPLETE A(1016)
MBMS RADIO BEARER SETUP COMPLETE B(1026)

MBMS RAB ASSIGNMENT RESPONSE A(1017)
MBMS RAB ASSIGNMENT RESPONSE B(1027)

MBMS SERVICE NOTIFY 3(1018)
MBMS SERVICE NOTIFY 3(1028)

MBMS SERVICE A(1019)
MBMS SERVICE B(1029)

FIG.7

1101

| IP header | UDP header | UDP payload(RTP header+RTP payload) |
|---|---|---|

| 0 | | | 7 | 8 | | 15 | 16 | | 23 | 24 | | 31 |
|---|---|---|---|---|---|---|---|---|---|---|---|---|
| V | P | X | CC | M | Payload | | Sequence number(1102) | | | | | |

| Time stamp(1103) |
|---|

| SSRC(1104) |
|---|

| CSRC(1105) |
|---|

| Header extension(1106) |
|---|

| Payload(1107) |
|---|

RTP header

1108

RTP payload

1109

# FIG.8

RECEIVE PHYSICAL CHANNEL CARRYING BASE LAYER'S DATA ~ 1201

RECEIVE PHYSICAL CHANNEL CARRYING ENHANCED LAYER'S DATA ~ 1211

DECODE PHYSICAL CHANNEL AND TRANSFER DECODED PHYSICAL CHANNEL DATA TO HIGHER LAYER ~ 1202

DECODE PHYSICAL CHANNEL AND TRANSFER DECODED PHYSICAL CHANNEL DATA TO HIGHER LAYER ~ 1212

INTERPRET RTP HEADER ~ 1204

INTERPRET RTP HEADER ~ 1214

OBTAIN TIMING INFORMATION AND CONTROL SYNCHRONIZATION ~ 1220

STORE BASE LAYER'S DATA IN SOURCE DECODING INPUT BUFFER ~ 1203

1205

1215

STORE ENHANCED LAYER'S DATA IN SOURCE DECODING INPUT BUFFER ~ 1213

CARRY OUT SOURCE DECODING OPERATION ~ 1221

PROVIDE ENHANCED MULTIMEDIA SERVICE ~ 1222

FIG.9

FIG. 10

FIG.11

EP 1 359 782 A1

**European Patent Office**

**EUROPEAN SEARCH REPORT**

Application Number

EP 03 01 0141

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 64059 A (ERICSSON TELEFON AB L M) 26 October 2000 (2000-10-26) * page 4, line 10 - line 28 * * page 6, line 12 - page 7, line 28 * * page 10, line 10 - page 11, line 6 * --- | 1-8, 10-15 | H04Q7/38 |
| X A | WO 99 13605 A (QUALCOMM INC) 18 March 1999 (1999-03-18) * page 3, line 24 - page 5, line 9 * * page 13, line 20 - page 14, line 33 * * abstract * --- | 1-3,10, 11,14 4,7,8, 12,13 | |
| X | EP 1 120 931 A (CIT ALCATEL) 1 August 2001 (2001-08-01) * the whole document * --- | 1,5,7, 10,14 | |
| X | EP 0 851 609 A (MATSUSHITA ELECTRIC IND CO LTD) 1 July 1998 (1998-07-01) * column 3, line 13 - column 5, line 9 * * abstract; claims 1-10 * ----- | 1,5,7, 10,14 | |

TECHNICAL FIELDS SEARCHED (Int.Cl.7)

H04Q

The present search report has been drawn up for all claims

| Place of search | Date of completion of the search | Examiner |
|---|---|---|
| THE HAGUE | 20 August 2003 | Coppieters, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 01 0141

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2003

| Patent document cited in search report | | Publication date | Patent family member(s) | | Publication date |
|---|---|---|---|---|---|
| WO 0064059 | A | 26-10-2000 | AU | 4445600 A | 02-11-2000 |
| | | | CA | 2370695 A1 | 26-10-2000 |
| | | | CN | 1357179 T | 03-07-2002 |
| | | | EP | 1192732 A2 | 03-04-2002 |
| | | | JP | 2002542707 T | 10-12-2002 |
| | | | WO | 0064059 A2 | 26-10-2000 |
| | | | TW | 459451 B | 11-10-2001 |
| WO 9913605 | A | 18-03-1999 | US | 6285655 B1 | 04-09-2001 |
| | | | AU | 753223 B2 | 10-10-2002 |
| | | | AU | 9475598 A | 29-03-1999 |
| | | | BR | 9812281 A | 18-07-2000 |
| | | | CA | 2302691 A1 | 18-03-1999 |
| | | | CN | 1273720 T | 15-11-2000 |
| | | | EP | 1013020 A1 | 28-06-2000 |
| | | | FI | 20000274 A | 05-05-2000 |
| | | | HU | 0003800 A2 | 28-02-2001 |
| | | | JP | 2001516990 T | 02-10-2001 |
| | | | NO | 20001153 A | 07-03-2000 |
| | | | NZ | 502724 A | 27-09-2002 |
| | | | PL | 342647 A1 | 18-06-2001 |
| | | | RU | 2199182 C2 | 20-02-2003 |
| | | | TR | 200000621 T2 | 21-11-2000 |
| | | | TW | 392396 B | 01-06-2000 |
| | | | WO | 9913605 A1 | 18-03-1999 |
| | | | US | 2002031082 A1 | 14-03-2002 |
| EP 1120931 | A | 01-08-2001 | EP | 1120931 A1 | 01-08-2001 |
| | | | US | 2001050961 A1 | 13-12-2001 |
| EP 0851609 | A | 01-07-1998 | JP | 3369069 B2 | 20-01-2003 |
| | | | JP | 10190618 A | 21-07-1998 |
| | | | AU | 691456 B1 | 14-05-1998 |
| | | | CA | 2223358 A1 | 25-06-1998 |
| | | | CN | 1188355 A ,B | 22-07-1998 |
| | | | EP | 0851609 A2 | 01-07-1998 |
| | | | US | 6212407 B1 | 03-04-2001 |

EPO FORM P0459

For more details about this annex : see Official Journal of the European Patent Office, No. 12/82